(19) Europäisches Patentamt / European Patent Office / Office européen des brevets

(11) **EP 4 050 254 B1**

(12) **EUROPÄISCHE PATENTSCHRIFT**

(45) Veröffentlichungstag und Bekanntmachung des Hinweises auf die Patenterteilung:
**02.04.2025   Patentblatt 2025/14**

(21) Anmeldenummer: **22158582.1**

(22) Anmeldetag: **24.02.2022**

(51) Internationale Patentklassifikation (IPC):
**G02B 6/04** *(2006.01)*    **G02B 27/09** *(2006.01)*
**B64D 47/02** *(2006.01)*    **G02B 6/44** *(2006.01)*
**B64D 11/00** *(2006.01)*    **G02B 19/00** *(2006.01)*
**G02B 27/30** *(2006.01)*    **F21V 8/00** *(2006.01)*

(52) Gemeinsame Patentklassifikation (CPC):
**G02B 6/04; B64D 11/00; G02B 6/0008;**
**G02B 6/4472; G02B 19/0019; G02B 19/0052;**
**G02B 27/30;** B64D 2011/0038; B64D 2011/0053

(54) **BELEUCHTUNGSEINRICHTUNG UND OPTISCHES ELEMENT FÜR EINE BELEUCHTUNGSEINRICHTUNG**

ILLUMINATION DEVICE AND OPTICAL ELEMENT FOR AN ILLUMINATION DEVICE

DISPOSITIF D'ÉCLAIRAGE ET ÉLÉMENT OPTIQUE POUR UN DISPOSITIF D'ÉCLAIRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **26.02.2021   DE 102021104700**

(43) Veröffentlichungstag der Anmeldung:
**31.08.2022   Patentblatt 2022/35**

(73) Patentinhaber: **SCHOTT AG**
**55122 Mainz (DE)**

(72) Erfinder: **WÖLFING, Bernd**
**55122 Mainz (DE)**

(74) Vertreter: **Blumbach · Zinngrebe Patentanwälte PartG mbB**
**Alexandrastraße 5**
**65187 Wiesbaden (DE)**

(56) Entgegenhaltungen:
**EP-A1- 3 270 050     CA-A- 979 696**
**US-A- 5 690 408**

**Beschreibung**

Die Erfindung betrifft eine Beleuchtungseinrichtung mit einer Lichtquelle und einem optischen Element welches die Divergenz des Lichts vermindert und vorzugsweise die Richtung des Lichts verändert, sowie ein entsprechendes optisches Element und den Einsatz des optischen Elements oder der Beleuchtungseinrichtung, etwa in einer Kabinenverkleidung einer Flugzeugkabine, in oder an einem Flugzeugsitz, etc.

Beim Einsatz von Leuchtdioden als Lichtquellen erfolgt die Abstrahlung von Licht in der Regel gerichtet, d.h. innerhalb eines begrenzten Raumwinkelbereichs, allerdings ist die Divergenz des Lichts typischerweise relativ hoch, d.h. der Öffnungswinkel innerhalb dessen der Großteil des Lichts abgegeben wird ist relativ groß, beispielsweise 120 Grad (±60 Grad). Für eine Reihe von Beleuchtungslösungen werden jedoch engere Verteilungen gewünscht, beispielsweise ≤ 60 Grad (≤ ±30 Grad).

Es sind Lösungen bekannt bei welchen eine Kollimierung des Lichts über eine sphärische oder asphärische Linse, eine TIR-Optik, einen Spiegel oder eine Kombination dieser Elemente erfolgt oder der Lichtkegel einfach mittels einer Blende abgeschnitten wird. Gemäß den physikalischen Gegebenheiten verbreitet sich der Lichtkegel abhängig von seinem Kollimationsgrad nach dem optischen Element wieder. Die Kombination aus LED-PCB, Optik und Halterung lassen sich nicht beliebig verkleinern. Typischerweise hat die Optik einen Durchmesser von mindestens 5 mm, meistens 10 mm. Standard TIR-Optiken haben einen Durchmesser von über 10 mm und eine Höhe von über 8 mm. Bei Anforderungen mit begrenztem Bauraum am Lichtaustritt, beispielsweise hinter einer Kabinenverkleidung einer Flugzeugkabine, ist es häufig nicht praktikabel, derartige Bauteile oder Kombinationen davon konstruktiv unterzubringen. Als zusätzlicher Nachteil ergibt sich, dass die Wärmeabführung von der LED nachteilig ist. Zum einen lässt sich aufgrund des begrenzten Bauraums kein guter Wärmeübergang erzielen. Zum anderen geht die Wärme direkt in die Gehäuseoberfläche über und erzeugt dort unerwünscht hohe Temperaturen. Insbesondere in Fällen, in denen der Lichtaustritt nicht senkrecht zu Gehäuseoberfläche ist, werden diese Nachteile noch verstärkt, da der benötigte Bauraum durch Schrägstellung der Komponenten häufig nochmals steigt und/oder ein zusätzlicher Lichtweg hinzutritt, welcher den divergenten Lichtkegel bis zum Austritt aus der Lichtquelle nochmals vergrößert. CA979696A offenbart eine faseroptische Vorrichtung, die aus mehreren Bündeln lichtleitender optischer Fasern besteht, wobei jedes Bündel eine Licht empfangende und eine gegenüberliegende Licht aussendende Stirnfläche besitzt.

Der Erfindung liegt demnach die Aufgabe zugrunde, eine Beleuchtungseinrichtung anzugeben, welche bei begrenztem Bauraum am Lichtaustritt eine Abgabe von Licht, welches beispielsweise von einer Leuchtdiode stammt, mit engem Lichtkegel abzugeben, und dabei die Eigenschaften der Lichtverteilung optimal aufeinander abzustimmen, z.B. für Kabinenleuchten in Flugzeugen.

Zur Lösung dieser Aufgabe offenbart die Erfindung eine Beleuchtungseinrichtung mit einer Lichtquelle zur Abstrahlung von, bevorzugt gerichtetem, bevorzugt divergentem, Licht, welche insbesondere als halbleiterbasierte Lichtquelle, etwa als Leuchtdiode ausgebildet ist, sowie ein optisches Element zur Verminderung der Divergenz und vorzugsweise zur Änderung der Richtung des von der Lichtquelle abgestrahlten Lichts.

Das optische Element weist eine Lichteintrittsfläche (proximal) zur Einkopplung des von der Lichtquelle abgestrahlten Lichts und eine Lichtaustrittsfläche (distal) zur Auskopplung des eingekoppelten Lichts auf. Die Lichteintrittsfläche empfängt demnach das von der Lichtquelle abgestrahlte Licht und bildet insbesondere ein proximales Ende des optischen Elements, welches der Lichtquelle zugewandt ist. Die Lichtaustrittsfläche, welche insbesondere ein distales Ende des optischen Elements bildet, gibt das eingekoppelte Licht mit veränderter Strahlcharakteristik wieder ab.

Das von der Lichtquelle abgestrahlte Licht weist demnach eine primäre Abstrahlcharakteristik auf und das aus dem optischen Element ausgekoppelte Licht eine sekundäre Abstrahlcharakteristik, wobei das optische Element insbesondere dazu eingerichtet ist, die primäre Abstrahlcharakteristik in die sekundäre Abstrahlcharakteristik zu überführen. Konkret weist dabei die sekundäre Abstrahlcharakteristik einen Abstrahlwinkel auf, welcher geringer ist als der Abstrahlwinkel der primären Abstrahlcharakteristik, um die Divergenz des von der Lichtquelle abgestrahlten Lichts zu vermindern.

Vorzugweise verläuft zudem die optische Achse der Lichtaustrittsfläche schräg zu der optischen Achse der Lichteintrittsfläche, um die Richtung des von der Lichtquelle abgestrahlten Lichts zu ändern. Hierdurch kann beispielsweise ein schräger Lichtaustritt ermöglicht werden, ohne dass die Lichtquelle gemäß der am Lichtaustritt gewünschten Schrägstellung verbaut zu werden braucht. Zwar ist ein schräger Verlauf der optischen Achsen der Lichtaustrittsfläche relativ zu der optischen Achse der Lichteintrittsfläche bevorzugt, jedoch grundsätzlich nicht notwendig. Es ist auch möglich, dass die optischen Achsen parallel zueinander verlaufen oder deckungsgleich sind, d.h. das keine Veränderung der optischen Achse erfolgt.

Besonders bevorzugt umfasst das optische Element eine Vielzahl von Lichtleitelementen welche jeweils einen Teil der Lichteintrittsfläche und einen Teil der Lichtaustrittsfläche des optischen Elements bilden und jeweils eine zwischen der Lichteintrittsfläche und der Lichtaustrittsfläche verlaufende Grenzfläche zur Reflexion, insbesondere zur Totalreflexion an dieser Grenzfläche, des eingekoppelten Lichts umfassen, wobei die Lichtleitelemente jeweils an der Lichtaustrittsfläche einen Querschnitt aufweisen, welcher größer ist als der Querschnitt an der Lichteintrittsfläche, derart, dass die Lichtaustrittsfläche des optischen Elements größer ist als die Lichteintrittsfläche des optischen Elements.

Durch die zumindest abschnittsweise Vergrößerung oder Aufweitung des Querschnitts entlang der Lichtlaufrichtung und die Reflexion des Lichts an der Grenzfläche erfährt ein Lichtstrahl mit jeder Reflexion an der Grenzfläche eine Winkelreduktion zur Mittelachse. Der größere Querschnitt des Lichtleitelements an der Lichtaustrittsfläche gegenüber dem Querschnitt an der Lichteintrittsfläche bewirkt somit, dass die sekundäre Abstrahlcharakteristik einen Abstrahlwinkel aufweist, welcher geringer ist als der Abstrahlwinkel der primären Abstrahlcharakteristik, so dass die Divergenz des von der Lichtquelle abgestrahlten Lichts vermindert wird.

Obwohl eine Vielzahl von Lichtleitelementen besonders bevorzugt ist, soll nicht ausgeschlossen sein, dass das optische Element in einer speziellen Ausführungsform gegebenenfalls auch nur ein Lichtleitelement umfasst und die Lichteintrittsfläche und die Lichtaustrittsfläche durch den Querschnitt des einzelnen Lichtleitelements gebildet ist. Im Folgenden soll jedoch die besonders bevorzugte Ausführungsform mit einer Vielzahl von Lichtleitelementen im Vordergrund stehen.

Wenn das optische Element nicht lediglich ein einzelnes Lichtleitelement, sondern eine Vielzahl von Lichtleitelementen umfasst, z.B. eine Vielzahl einzelner Fasern enthält, von denen jede durch einen Kern und einen Mantel ein nahezu geschlossenes optisches System darstellt, reduziert sich die Divergenz der Lichtes am distalen Ende, also ausgangsseitig des optischen Elementes, bei gleicher Vergrößerung des Querschnitts entlang der Lichtlaufrichtung in vorteilhafter Weise über kürzere Längen des optischen Elementes . Dies wird weiter unten im Rahmen der Figurenbeschreibung illustriert. Ein optisches Element mit einer Vielzahl von Lichtleitelementen ist demnach insbesondere für eine Beleuchtung bei engem Bauraum besonders vorteilhaft.

Vorzugsweise umfasst das optische Element einen Aufweitungsabschnitt innerhalb dessen der Querschnitt der Lichtleitelemente und/oder der Querschnitt des optischen Elements zunimmt, insbesondere konusförmig zunimmt. (Konusförmig bezieht sich hierbei nicht auf einen Kegelstumpf also einen konstanten Öffnungswinkel, sondern mathematisch allgemeiner auf einen Körper der durch die Rotation einer Kurve um eine Achse gebildet wird, das heißt, dass der Aufweitungsabschnitt zwar einen Teil mit konstantem Öffnungswinkel enthalten kann, aber insbesondere im Übergang zum zylinderförmigen Bereich an beiden Enden bedingt durch das Herstellungsverfahren eine graduelle Zu- bzw. Abnahme des Öffnungswinkels auftritt. Im Grenzfall eines kurzen Aufweitungsabschnitts existiert kein Bereich mit konstantem Öffnungswinkel.) Ferner umfasst das optische Element vorzugsweise einen Krümmungsabschnitt innerhalb dessen die optische Achse des optischen Elements gebogen verläuft, insbesondere auf einem Kreisbogen verläuft.

Der Aufweitungsabschnitt und der Krümmungsabschnitt sind bevorzugt entlang der optischen Achse voneinander beabstandet, angeordnet, besonders bevorzugt derart, dass der Aufweitungsabschnitt näher an der Lichteintrittsfläche und Krümmungsabschnitt näher an der Lichtaustrittsfläche angeordnet ist

Das optische Element kann auch einen oder mehrere Linearabschnitte aufweisen innerhalb derer der Querschnitt konstant bleibt und die optische Achse geradlinig verläuft, wobei der oder die Linearabschnitte bevorzugt vor und/oder hinter dem Aufweitungsabschnitt und/oder dem Krümmungsabschnitt, besonders bevorzugt zwischen dem Aufweitungsabschnitt und dem Krümmungsabschnitt angeordnet sind.

Vorzugweise sind der Aufweitungsabschnitt, der Krümmungsabschnitt und/oder der oder die Linearabschnitte entlang der optischen Achse miteinander monolithisch ausgebildet.

Die sekundäre Abstrahlcharakteristik kann einen Abstrahlwinkel ($\beta$) aufweisen, welcher geringer ist als 60 Grad (d.h. +-30 Grad um die optische Achse), vorzugsweise geringer ist als 50 Grad, besonders bevorzugt geringer ist als 40 Grad.

Das optische Element kann ein Verhältnis zwischen dem Abstrahlwinkel ($\beta$) der sekundären Abstrahlcharakteristik und dem Abstrahlwinkel ($\alpha$) der primären Abstrahlcharakteristik definieren, welches geringer ist als 0,7, vorzugsweise geringer ist als 0,6, besonders bevorzugt geringer ist als 0,5.

Ferner kann das optische Element ein Verhältnis $(\sin \alpha / \sin \beta)^2$ für den Abstrahlwinkel ($\alpha$) der primären Abstrahlcharakteristik und den Abstrahlwinkel ($\beta$) der sekundären Abstrahlcharakteristik definieren, welches zwischen 2 und 100 liegt, vorzugsweise zwischen 3 und 50 liegt, besonders bevorzugt zwischen 4 und 25 liegt, nochmals bevorzugter zwischen 5 und 15 liegt.

Die sekundäre Abstrahlcharakteristik kann insbesondere durch ein Wertetripel umfassend die Rundheit, die Inhomogenität und den Streulichtanteil gekennzeichnet sein.

Beispielsweise kann die sekundäre Abstrahlcharakteristik eine Rundheit aufweisen, welche größer ist als 0,4 und eine Inhomogenität aufweisen, welche geringer ist als 0,35 und einen Streulichtanteil aufweisen, welcher geringer ist als 0,2.

Bevorzugt kann die sekundäre Abstrahlcharakteristik eine Rundheit aufweisen, welche größer ist als 0,65 und eine Inhomogenität aufweisen, welche geringer ist als 0,25 und einen Streulichtanteil aufweisen, welcher geringer ist als 0,15.

Besonders bevorzugt kann die sekundäre Abstrahlcharakteristik eine Rundheit aufweisen, welche größer ist als 0,85 und eine Inhomogenität aufweisen, welche geringer ist als 0,2 und einen Streulichtanteil aufweisen, welcher geringer ist als 0,05.

Die Rundheit ist dabei vorzugsweise wie folgt bestimmbar:

- Unterteilung des Winkelraums in 8 Drehwinkelsegmente ($\varphi1$, $\varphi2$, $\varphi3$, $\varphi4$, $\varphi5$, $\varphi6$, $\varphi7$, $\varphi8$)
- Berechnung des Verhältnisses minimale Intensität in einem Drehwinkelsegment / maximale Intensität in einem Drehwinkelsegment,

wobei dieses Verhältnis im Idealfall 1 ist und im schlechtesten Fall 0.

Der Streulichtanteil ist dabei vorzugsweise wie folgt bestimmbar:

- Für jeden Lichtstrahl der außerhalb des Sollwinkelbereichs (Abstrahlwinkel $\beta$) emittiert wird:

  - Berechnung der quadratischen Abweichung des Strahlwinkels zum maximalen Sollwinkel.
  - Gewichtung der quadratischen Abweichung mit der Intensität des Lichtstrahls.
  - Summierung über alle Lichtstrahlen.
  - Normierung auf das Quadrat des maximalen Sollwinkels.

Die Inhomogenität ist dabei vorzugsweise wie folgt bestimmbar:

- Standardabweichung der Segmenthelligkeiten ($\theta1$, $\theta2$, $\theta3$, $\theta4$) / Mittelwert der Segmenthelligkeiten ($\theta1$, $\theta2$, $\theta3$, $\theta4$)
- Auswertung über den Zielbereich der Lichtverteilung (Abstrahlwinkel $\beta$)

Beispiel: Lichtleiter mit Flächenverhältnis 1:9 führt zu einem Zielbereich +/- 14°. Übertragung auf Raumwinkel (Kugeloberfläche): Kippwinkel = 0 bis 14°, Drehwinkel (Azimuth) = 0 bis 360°. Einteilung der Kippwinkel in 12 Bereiche mit gleichem Raumwinkelanteil. Im Fall einer Lichtquelle, die in alle Richtungen gleich hell ist (konstante Lichtstärke über den Zielbereich), fällt in jeden Bereich (Segment) der gleiche Lichtstrom. Im realen Anwendungsfall ist üblicherweise eine ebene Fläche zu beleuchten, die ggf noch unter einem bestimmten Winkel zur optischen Achse des Lichtkegels gekippt ist. Um von diesen verschiedenen Einzelfällen zu abstrahieren, wurde die anwendungsunabhängige Betrachtung der konstanten Lichtstärke gewählt. Als Maß der Abweichung zwischen den verschiedenen Segmenten wurde die Standardabweichung gewählt, da sie alle Segmente berücksichtig. Eine Alternative wäre eine Minimal-zu-Maximal-Betrachtung, die aber sehr stark durch einzelne Segmente beeinflusst werden kann und damit weniger gut den Gesamteindruck wiedergibt. Die Standardabweichung wird durch den Mittelwert der Helligkeiten geteilt, da für die Homogenität die relativen Helligkeitsschwankungen ausschlaggebend sind, nicht die absoluten.

Bei den vorstehend genannten Definitionen zur Bestimmung der Rundheit, des Streulichtanteils und der Inhomogenität ist vorzugsweise ein Abstrahlwinkel ($\beta$) wählbar, derart, dass die oben genannten Tripel erfüllt werden, bspw. kann ein als kegelförmiger Raumwinkel ausgebildeter Abstrahlwinkel wählbar sein, innerhalb welchen 90 Prozent der Lichtintensität des Lichts gelangt.

Die Beleuchtungseinrichtung zeichnet sich vorzugweise dadurch aus, dass das Verhältnis der Flächen der Lichtaustrittsfläche und der Lichteintrittsfläche und/oder der Querschnitte der Lichtleitelemente an der Lichtaustrittsfläche und der Lichteintrittsfläche zwischen 2 und 100, vorzugsweise zwischen 3 und 50 liegt, besonders bevorzugt zwischen 4 und 25 liegt, nochmals bevorzugter zwischen 5 und 15 liegt

Ferner kann das optische Element einen senkrecht zur optischen Achse gebildeten Querschnitt aufweisen, welcher rund, insbesondere kreisförmig, eckig, insbesondere polygonal oder quadratisch und/oder wobei die Form des Querschnitts entlang der gesamten Länge der optischen Achse kongruent bleibt.

Es kann vorgesehen sein, dass der Winkel zwischen der optischen Achse der Lichtaustrittsfläche und der optischen Achse der Lichteintrittsfläche und/oder der durch den Krümmungsabschnitt bedingte Winkel, größer ist als 10 Grad, bevorzugt größer ist als 20 Grad, besonders bevorzugt größer ist als 30 Grad, oder größer ist als 40 Grad, oder größer ist als 80 Grad.

Der Krümmungsabschnitt oder gekrümmte Bereich kann von einem idealen Kreisbogen abweichen, d.h. es können lokale Krümmungsradien innerhalb des Krümmungsabschnittes auftreten, die teilweise größer und/oder teilweise kleiner als der Radius des idealen Kreisbogens sind. Kleinere lokale Krümmungsradius in einem Teil des Krümmungsabschnittes des Lichtleiters können eine Störung der Lichtleitung bewirken, die durch die geringere Störung der Lichtleitung in dem anderen Teil mit dem größeren Radius ggf. kaum oder nicht kompensiert wird. Die Lichtleitung auf einem idealen Kreisbogen im Krümmungsabschnitt stellt also optisch den Idealfall dar und ist anzustreben.

Eine Abweichung vom idealen Kreisbogen mit größeren oder auch kleineren lokalen Krümmungsradien können dennoch vorteilhaft sein, da bspw. die abweichende Form einfacher herzustellen ist (insbesondere gibt es einen Einlauf- und Auslaufbereich mit größerem lokalen Krümmungsradius) oder der Bauraum in der Einbausituation ist entlang des idealen Kreisbogens belegt ist, so daß der Krümmungsabschnitt dem vorteilhaft, ggf. mit kleinerem lokalen Krümmungsradius, anzupassen ist. Als Sonderfall kann der gekrümmte Bereich auch einen oder mehrere gerade Bereiche enthalten.

So kann eine Krümmung mit einem großen äquivalenten Krümmungsradius hergestellt werden, wobei die Umformung nur in einigen Bereichen erfolgt. Diese vom idelaen Kreisbogen abweichenden Krümmungsabschitte können mittels eines äquivalente Krümmungsradius beschrieben werden. Der äquivalente Krümmungsradius entspricht dabei dem Krümmungsradius desjenigen Kreisbogens, welcher zumindest am Anfang des Krümmungsabschnitts sowie am Ende des Krümmungsabschnitts kongruent mit der optischen Achse des optischen Elements verläuft.

Damit kann der Krümmungsabschnitt innerhalb dessen die optische Achse des optischen Elements gebogen verläuft, insbesondere auf einem Kreisbogen verläuft, auch einen äquivalenten Krümmungsradius aufweisen oder durch diesen beschrieben werden, welcher größer ist als 2 Millimeter, bevorzugt größer ist als 4 Millimeter, besonders bevorzugt größer ist als 8 Millimeter, oder größer ist als 16 Millimeter oder größer ist als 32 Millimeter, und vorzugsweise kleiner ist als 40 Millimeter.

Wie bereits beschrieben sind vorzugsweise eine Vielzahl von Lichtleitelementen umfasst. Die Vielzahl von Lichtleitelementen umfasst dabei insbesondere mindestens 10, bevorzugt mindestens 100, besonders bevorzugt mindestens 1000, nochmals bevorzugter mindestens 10000 Lichtleitelemente, welche insbesondere als einzelne, miteinander verbundenen insbesondere verschmolzene Lichtleitfasern ausgebildet sind.

Vorzugweise umfassen die Lichtleitelemente jeweils einen Kern und einen Mantel, wobei der Kern einen Brechungsindex aufweist, welcher höher ist als ein Brechungsindex des Mantels, wobei z.B. der Brechungsindex des Kerns größer ist als 1,55 und der Brechungsindex des Mantels kleiner ist als 1,55.

Die Lichtleitelemente können jeweils einen Kern umfassen, welcher einen Durchmesser aufweist, welcher geringer ist als 1000 Mikrometer, bevorzugt geringer ist als 200 Mikrometer, besonders bevorzugt geringer ist als 100 Mikrometer oder geringer ist als 50 Mikrometer oder geringer ist als 16 Mikrometer oder geringer ist als 8 Mikrometer oder geringer ist als 4 Mikrometer, wobei der Durchmesser insbesondere an der Lichteintrittsfläche vorliegt

Ferner können die Lichtleitelemente jeweils einen Mantel umfassen, wobei das Verhältnis der Manteldicke zu dem Kernradius kleiner ist als 0,5, vorzugsweise kleiner ist als 0,1, besonders bevorzugt kleiner ist als 0,01, und/oder wobei die Manteldicke vorzugsweise zumindest 300 Nanometer beträgt.

In einer bevorzugten Ausführungsform ist vorgesehen, dass das Verhältnis der Länge des Aufweitungsabschnitts und dem Durchmesser des Kerns der Lichtleitelemente, insbesondere an der Lichteintrittsfläche, zumindest 10 beträgt, vorzugsweise zumindest 25 beträgt, besonders bevorzugt zumindest 50 beträgt.

Ferner ist vorgesehen, dass das das Verhältnis des Krümmungsradius des Krümmungsabschnitts, insbesondere des äquivalenten Krümmungsradius, und dem Durchmesser des Kerns der Lichtleitelemente, zumindest im Krümmungsabschnitt, zumindest 10 beträgt, vorzugsweise zumindest 40 beträgt, besonders bevorzugt zumindest 75 beträgt. Hinsichtlich der Materialien kann das optische Element, insbesondere der Kern der Lichtleitelemente, ein Glas, insbesondere ein mehrkomponentiges silikatisches Glas, umfassen oder daraus bestehen. Ferner können die Lichtleitelemente einen Kern und einen Mantel umfassen, wobei das Kern- und/oder das Mantelglas der Lichtleitelemente bis auf unvermeidliche Spuren frei ist von Blei und/oder Antimon und/oder Arsen und/oder von sonstigen Schwermetallen. Zudem können die Lichtleitelemente eine numerische Apertur gegenüber Luft von größer als 0,80, bevorzugt von größer als 0,85 aufweisen und/oder ein Glassystem umfassen oder aus einem solchen bestehen, welches für das zu leitende Licht einen Akzeptanzwinkel $2\alpha$ von größer 80°, besonders bevorzugt von größer 100° aufweist.

Bevorzugte Kerngläser umfassen die folgenden Komponenten in den folgenden Zusammensetzungsbereichen in Gewichtsprozent:

| Komponente | von | bis |
|---|---|---|
| $B_2O_3$ | 0 | 24 |
| $SiO_2$ | 23 | 62,1 |
| $Al_2O_3$ | 0 | 10 |
| $Li_2O$ | 0 | 10 |
| $Na_2O$ | 0 | 18,5 |
| $K_2O$ | 0 | 25,7 |
| BaO | 0 | 57,8 |
| ZnO | 0 | 40 |
| $La_2O_3$ | 0 | 25 |
| $ZrO_2$ | 0 | 10 |
| $HfO_2$ | 0 | 14,2 |
| $SnO_2$ | >0 | 2 |

(fortgesetzt)

| Komponente | von | bis |
|---|---|---|
| MgO | 0 | 8 |
| CaO | 0 | 8 |
| SrO | 0 | 24,4 |
| $Ta_2O_5$ | 0 | 22 |
| $Y_2O_3$ | 0 | 11,9 |
| $Rb_2O$ | 0 | 15 |
| $Cs_2O$ | 0 | 21 |
| $GeO_2$ | 0 | 7,5 |
| F | 0 | 2 |
| $\Sigma\ R_2O$ | 5 | 20 |
| $\Sigma$ MgO, CaO, SrO, ZnO | 20 | 42 |
| $R_2O$ ist jeweils die Summe der Gehalte aller Alkalimetalloxide. | | |

Eine oder mehrere der folgenden Komponenten kann vom Kernglas umfasst sein: $Cs_2O$, $Rb_2O$, MgO, CaO, SrO, $Gd_2O_3$, $Lu_2O_3$, $Sc_2O_3$, $Y_2O_3$, $In_2O_3$, $Ga_2O_3$ und $WO_3$.

Folgende Komponenten sollten im Kernglas bevorzugt nicht enthalten sein oder lediglich in Konzentrationen von jeweils höchstens 500 ppm, die durch unvermeidbare Verunreinigungen der Rohstoffe bedingt sind: $TiO_2$, $CeO_2$, $Nb_2O_5$, $MoO_3$, $Bi_2O_3$, PbO, CdO, $Tl_2O$, $As_2O_3$, $Sb_2O_3$, $SO_3$, $SeO_2$, $TeO_2$, BeO, radioaktive Elemente und färbende Komponenten, soweit im Text nicht anders beschrieben. Insbesondere auf $TiO_2$ sollte verzichtet werden, weil diese Komponente für eine ausgeprägte Absorption im UV-Bereich führen kann. In bevorzugten Ausführungsformen wird auch auf die Komponente $WO_3$ verzichtet.

Die Komponenten $TiO_2$, $CeO_2$, $Nb_2O_5$ und/oder $Bi_2O_3$ können bis maximal 0,5 Gew.-%, bevorzugt bis 0,3 Gew.-% und besonders bevorzugt bis 0,2 Gew.-% im Kernglas enthalten sein. In einer bevorzugte Ausführungsform ist das Kernglas frei von diesen Komponenten.

Bevorzugt ist das Kernglas frei von optisch aktiven Komponenten, insbesondere $Sm_2O_3$, $Nd_2O_3$, $Dy_2O_3$, $Pr_2O_3$, $Eu_2O_3$, $Yb_2O_3$, $Tb_2O_3$, $Er_2O_3$, $Tm_2O_3$ und/oder $Ho_2O_3$. $CeO_2$ absorbiert im UV-Bereich, so dass bevorzugte Kerngläser kein $CeO_2$ enthalten.

Der Gehalt der Komponenten Erdalkalimetalloxide, $La_2O_3$, $Ta_2O_5$, $ZrO_2$ und $HfO_2$ beträgt in Summe vorzugsweise und insbesondere für Kerngläser mit Brechwerten von mehr als 1,65 wenigstens 40 Gew.-%, weiter bevorzugt wenigstens 42 Gew.-%, mehr bevorzugt wenigstens 50 Gew.-% und besonders bevorzugt wenigstens 55 Gew.-%. Wenn der Gehalt dieser Komponenten zu niedrig ist, kann der bevorzugte Brechungsindex normalerweise nicht erreicht werden. Formulierungsbedingt sollte diese Summe einen Wert von 72 Gew.-% nicht übersteigen.

In einer bestimmten Ausführungsform weist das Mantelglas folgende Merkmale auf:

Bevorzugt weist das Mantelglas einen Gehalt an $SiO_2$ von >60 Gew.-%, weiter bevorzugt >65 Gew.-% und besonders bevorzugt von mindestens 69 Gew.-% auf. Der $SiO_2$-Gehalt beträgt bevorzugt höchstens 75 Gew.-% und besonders bevorzugt bis zu 73 Gew.-%. Das Mantelglas ist tendenziell stärkeren Umwelteinflüssen ausgesetzt als das Kernglas. Ein hoher $SiO_2$-Gehalt verleiht bessere chemische Resistenz. Folglich ist der Gehalt an dieser Komponente im Mantelglas bevorzugt größer als im Kernglas.

Vorzugsweise wird die Zusammensetzung des Mantelglases so ausgewählt bzw. an die des Kernglases angepasst, dass der lineare thermische Ausdehnungskoeffizient des Mantelglases und derjenige des Kernglases sich möglichst wenig unterscheiden. Allgemein kann der thermische Ausdehnungskoeffizient (CTE) in einem Temperaturbereich von 20 bis 300°C für Faserkern und Fasermantel gleich oder unterschiedlich sein. Insbesondere ist der CTE unterschiedlich. Vorzugsweise ist der CTE des Mantels kleiner als der CTE des Faserkerns, typischerweise ist er mindestens um $1,0*10^{-6}$ /K kleiner, kann aber auch, je nach Glas typischerweise mindestens um $2,5*10^{-6}$ /K. kleiner sein. Der Faserkern weist typischerweise einen CTE von $6,5*10^{-6}$ bis $10*10^{-6}$ auf, der Mantel einen CTE von $4,5*10^{-6}$ bis $6*10^{-6}$. Dadurch wird erreicht, dass der Kern der Faser beim Abkühlen stärker als der Fasermantel schrumpft, wodurch im Fasermantel eine die Faser schützende Druckspannung aufgebaut wird, was für die mechanische Belastbarkeit der Faser, insbesondere ihrer Biegefestigkeit zuträglich ist.

Die folgende Tabelle zeigt einige bevorzugte Zusammensetzungen von Mantelgläsern, die zusammen mit den Kerngläsern verwendet werden können. Die Mantelgläser umfassen (in Gew.-% auf Oxidbasis):

| Oxide | Gruppe 1 | Gruppe 2 | Gruppe 3 | Gruppe 4 |
|---|---|---|---|---|
| $SiO_2$ | 70 - 78 | 63 - 75 | 75 - 85 | 62 - 70 |
| $Al_2O_3$ | 5 - 10 | 1 -7 | 1 - 5 | 1 - 10 |
| $B_2O_3$ | 5-14 | 0 - 3 | 10 - 14 | > 15 |
| $Li_2O$ | frei | 0 - 1 | 0 - 3 | < 0,1 |
| $Na_2O$ | 0 - 10 | 8 - 20 | 2 - 8 | 0 - 10 |
| $K_2O$ | 0 - 10 | 0 - 6 | 0 - 1 | 0 - 10 |
| MgO | 0 - 1 | 0 - 5 | frei | 0 - 5 |
| CaO | 0 - 2 | 1 - 9 | frei | 0 - 5 |
| SrO | 0 - 1 | frei | frei | 0 - 5 |
| BaO | 0 - 1 | 0 - 5 | frei | 0 - 5 |
| Halogen | frei | frei | frei | frei |

Besonders vorteilhaft ist es, wenn das optische Element ein Pb- bzw. Schwermetall-freies Kernglas und Mantelglas umfasst oder daraus besteht. Derartige Glassysteme bieten insbesondere eine hohe Transmission im VIS-Spektralbereich und zeigen aufgrund der vergleichsweisen hohen Transmission im blauen Spektralbereich eine hohe Farbtreue. Damit können Beleuchtungseinrichtungen bereitgestellt werden, die als Gesamtsystems aus Lichtquelle und Lichtleiter (optisches Element) eine Beleuchtung, insb. bei Beleuchtung mit weißem Licht, bspw. mit einer weißen LED als Lichtquelle, mit kaum verändertem CRI (Color Rendering Index) der Lichtquelle ermöglichen. Derartige Glassysteme sind seitens der Anmelderin unter dem Namen SCHOTT PURAVIS® bekannt und sind hinsichtlich ihrer Zusammensetzungen in der DE 102012100233 B4 und DE 102013208838 B4 beschrieben. Ähnliche Fasersysteme sind auch in der EP 2072477 B1 beschrieben, welche ebenfalls Pb-frei sind.

Es kann von Vorteil sein, wenn das optische Element aus einem Glassystem bestehen, welches für das zu leitende Licht einen Akzeptanzwinkel $2\alpha$ von größer 80°, besonders bevorzugt von größer 100° aufweist, was einer numerischen Apertur (NA) von größer 0,64, besonders bevorzugt größer 0,77 entspricht. Zum einen kann so erreicht werden, dass insbesondere Licht von LEDs, welche i.d.R. einen sehr breiten Abstrahlwinkel aufweisen, ohne komplexe Optiken am proximalen Ende in das optische Element einkoppelbar sind, ohne dass erhöhte Einkoppelverluste entstehen.

Die Erfindung betrifft ferner ein optisches Element zur Verminderung der Divergenz und vorzugsweise zur Änderung der Richtung von Licht, insbesondere für eine Beleuchtungseinrichtung wie vorstehend beschrieben. Das erfindungsgemäße optische Element kann insbesondere eines oder mehrere der Merkmale aufweisen, welche für das optische Element im Rahmen der vorstehend beschriebenen Beleuchtungseinrichtung offenbart sind.

Demnach umfasst das optische Element eine Lichteintrittsfläche zur Einkopplung von Licht mit einer primären Abstrahlcharakteristik und eine Lichtaustrittsfläche zur Auskopplung des eingekoppelten Lichts mit einer sekundären Abstrahlcharakteristik, wobei die sekundäre Abstrahlcharakteristik einen Abstrahlwinkel ($\beta$) aufweist, welcher geringer ist als der Abstrahlwinkel der primären Abstrahlcharakteristik, um die Divergenz des Lichts zu vermindern.

Vorzugweise verläuft die optische Achse der Lichtaustrittsfläche schräg zu der optischen Achse der Lichteintrittsfläche, um die Richtung des Lichts zu ändern.

Das optische Element umfasst ferner eine Vielzahl von Lichtleitelementen, welche jeweils einen Teil der Lichteintrittsfläche und einen Teil der Lichtaustrittsfläche bilden und jeweils eine zwischen der Lichteintrittsfläche und der Lichtaustrittsfläche verlaufende Grenzfläche zur Reflexion, insbesondere zur Totalreflektion an dieser Grenzfläche, des eingekoppelten Lichts umfassen.

Die Lichtleitelemente weisen jeweils an der Lichtaustrittsfläche einen Querschnitt auf, welcher größer ist als der Querschnitt an der Lichteintrittsfläche, insbesondere derart, dass die Lichtaustrittsfläche größer ist als die Lichteintrittsfläche.

Das optische Element umfasst vorzugsweise einen Aufweitungsabschnitt innerhalb dessen der Querschnitt der Lichtleitelemente und/oder der Querschnitt des optischen Elements zunimmt, insbesondere konusförmig zunimmt

Das optische Element umfasst vorzugsweise einen Krümmungsabschnitt innerhalb dessen die optische Achse des optischen Elements gebogen verläuft, insbesondere auf einem Kreisbogen verläuft.

Es kann vorgesehen sein, dass der Aufweitungsabschnitt und der Krümmungsabschnitt entlang der optischen Achse voneinander beabstandet, angeordnet sind, besonders bevorzugt derart, dass der Aufweitungsabschnitt näher an der Lichteintrittsfläche und Krümmungsabschnitt näher an der Lichtaustrittsfläche angeordnet ist.

Das optische Element umfasst vorzugsweise einen oder mehrere Linearabschnitte innerhalb derer der Querschnitt konstant bleibt und die optische Achse geradlinig verläuft, wobei der oder die Linearabschnitte bevorzugt vor und/oder hinter dem Aufweitungsabschnitt und/oder dem Krümmungsabschnitt, besonders bevorzugt zwischen dem Aufweitungsabschnitt und dem Krümmungsabschnitt angeordnet sind.

Es kann vorgesehen sein, dass der Aufweitungsabschnitt, der Krümmungsabschnitt und/oder der oder die Linearabschnitte vorzugsweise entlang der optischen Achse miteinander monolithisch ausgebildet sind.

Es kann vorgesehen sein, dass das optische Element ein Verhältnis zwischen dem Abstrahlwinkel ($\beta$) der sekundären Abstrahlcharakteristik und dem Abstrahlwinkel ($\alpha$) der primären Abstrahlcharakteristik definiert, welches geringer ist als 0,7, vorzugsweise geringer ist als 0,6, besonders bevorzugt geringer ist als 0,5.

Es kann vorgesehen sein, dass das optische Element ein $|(\sin\alpha/\sin\beta)|^2$ für den Abstrahlwinkel ($\alpha$) der primären Abstrahlcharakteristik und den Abstrahlwinkel ($\beta$) der sekundären Abstrahlcharakteristik definiert, welches zwischen 2 und 100 liegt, vorzugsweise zwischen 3 und 50 liegt, besonders bevorzugt zwischen 4 und 25 liegt, nochmals bevorzugter zwischen 5 und 15 liegt.

Es kann vorgesehen sein, dass die sekundäre Abstrahlcharakteristik eine Rundheit aufweist, welche größer ist als 0,4 und eine Inhomogenität aufweist, welche geringer ist als 0,35 und einen Streulichtanteil aufweist, welcher geringer ist als 0,2.

Es kann vorgesehen sein, dass die sekundäre Abstrahlcharakteristik bevorzugt eine Rundheit aufweist, welche größer ist als 0,65 und eine Inhomogenität aufweist, welche geringer ist als 0,25 und einen Streulichtanteil aufweist, welcher geringer ist als 0,15.

Es kann vorgesehen sein, dass die sekundäre Abstrahlcharakteristik besonders bevorzugt eine Rundheit aufweist, welche größer ist als 0,85 und eine Inhomogenität aufweist, welche geringer ist als 0,2 und einen Streulichtanteil aufweist, welcher geringer ist als 0,05.

Die vorstehenden Eigenschaften können insbesondere vorgesehen sein bei einer primären Abstrahlcharakteristik, welche im Wesentlichen einer lambertschen Charakteristik folgt.

Es kann vorgesehen sein, dass das Verhältnis der Flächen der Lichtaustrittsfläche und der Lichteintrittsfläche und/oder der Querschnitte der Lichtleitelemente an der Lichtaustrittsfläche und der Lichteintrittsfläche zwischen 2 und 100, vorzugsweise zwischen 3 und 50 liegt, besonders bevorzugt zwischen 4 und 25 liegt, nochmals bevorzugter zwischen 5 und 15 liegt.

Es kann vorgesehen sein, dass das optische Element einen senkrecht zur optischen Achse gebildeten Querschnitt aufweist, welcher rund, insbesondere kreisförmig, eckig, insbesondere polygonal oder quadratisch und/oder wobei die Form des Querschnitts entlang der gesamten Länge der optischen Achse kongruent bleibt.

Es kann vorgesehen sein, dass der Winkel zwischen der optischen Achse der Lichtaustrittsfläche und der optischen Achse der Lichteintrittsfläche und/oder der durch den Krümmungsabschnitt bedingte Winkel, größer ist als 10 Grad, bevorzugt größer ist als 20 Grad, besonders bevorzugt größer ist als 30 Grad, oder größer ist als 40 Grad, oder größer ist als 80 Grad.

Es kann vorgesehen sein, dass der Krümmungsabschnitt innerhalb dessen die optische Achse des optischen Elements gebogen verläuft, insbesondere auf einem Kreisbogen verläuft, einen äquivalenten Krümmungsradius aufweist, welcher größer ist als 2 Millimeter, bevorzugt größer ist als 4 Millimeter, besonders bevorzugt größer ist als 8 Millimeter, oder größer ist als 16 Millimeter oder größer ist als 32 Millimeter, und vorzugsweise kleiner ist als 40 Millimeter.

Es kann vorgesehen sein, dass der äquivalente Krümmungsradius dem Krümmungsradius desjenigen Kreisbogens entspricht, welcher zumindest am Anfang des Krümmungsabschnitts (P1) sowie am Ende des Krümmungsabschnitts (P2) kongruent mit der optischen Achse des optischen Elements verläuft.

Es kann vorgesehen sein, dass die Vielzahl von Lichtleitelementen mindestens 10, bevorzugt mindestens 100, besonders bevorzugt mindestens 1000, nochmals bevorzugter mindestens 10000 Lichtleitelemente umfasst, welche insbesondere als einzelne, miteinander verbundenen insbesondere verschmolzene Lichtleitfasern ausgebildet sind.

Es kann vorgesehen sein, dass die Lichtleitelemente jeweils einen Kern und einen Mantel umfassen, wobei der Kern einen Brechungsindex aufweist, welcher höher ist als ein Brechungsindex des Mantels.

Es kann vorgesehen sein, dass die Lichtleitelemente jeweils einen Kern umfassen, welcher einen Durchmesser aufweist, welcher geringer ist als 1000 Mikrometer, bevorzugt geringer ist als 200 Mikrometer, besonders bevorzugt geringer ist als 100 Mikrometer oder geringer ist als 50 Mikrometer oder geringer ist als 16 Mikrometer oder geringer ist als 8 Mikrometer oder geringer ist als 4 Mikrometer, wobei der Durchmesser insbesondere an der Lichteintrittsfläche vorliegt.

Es kann vorgesehen sein, dass die Lichtleitelemente jeweils einen Mantel umfassen, wobei das Verhältnis der Manteldicke zu dem Kernradius kleiner ist als 0,5, vorzugsweise kleiner ist als 0,1, besonders bevorzugt kleiner ist als 0,01, und/oder wobei die Manteldicke vorzugsweise zumindest 300 Nanometer beträgt.

Es kann vorgesehen sein, dass das Verhältnis der Länge des Aufweitungsabschnitts und dem Durchmesser des Kerns der Lichtleitelemente, insbesondere an der Lichteintrittsfläche, zumindest 10 beträgt, vorzugsweise zumindest 25 beträgt, besonders bevorzugt zumindest 50 beträgt.

Es kann vorgesehen sein, dass das Verhältnis des Krümmungsradius des Krümmungsabschnitts, insbesondere des äquivalenten Krümmungsradius, und dem Durchmesser des Kerns der Lichtleitelemente, insbesondere im Krümmungsabschnitt, zumindest 10 beträgt, vorzugsweise zumindest 40 beträgt, besonders bevorzugt zumindest 75 beträgt.

Es kann vorgesehen sein, dass das optische Element, insbesondere der Kern der Lichtleitelemente, ein Glas, insbesondere ein mehrkomponentiges silikatisches Glas, umfasst oder daraus besteht.

Es kann vorgesehen sein, dass die Lichtleitelemente einen Kern und einen Mantel umfassen, wobei das Kern- und/oder das Mantelglas der Lichtleitelemente bis auf unvermeidliche Spuren frei ist von Blei und/oder Antimon und/oder Arsen und/oder von sonstigen Schwermetallen.

Es kann vorgesehen sein, dass die Lichtleitelemente eine numerische Apertur gegenüber Luft von größer als 0,80, bevorzugt von größer als 0,85 aufweisen und/oder ein Glassystem umfassen oder aus einem solchen bestehen, welches für das zu leitende Licht einen Akzeptanzwinkel $2\alpha$ von größer 80°, besonders bevorzugt von größer 100° aufweist.

Das optische Element kann bei einer primären Abstrahlcharakteristik, welche im Wesentlichen einer lambertschen Charakteristik folgt, die typischerweise bei LEDn vorliegt insbesondere folgende Wertetripel für die Rundheit, die Inhomogenität und den Streulichtanteil der sekundären Abstrahlcharakteristik aufweisen:

-   Die sekundäre Abstrahlcharakteristik weist eine Rundheit auf, welche größer ist als 0,4 und eine Inhomogenität, welche geringer ist als 0,35 und einen Streulichtanteil, welcher geringer ist als 0,2,
-   bevorzugt eine Rundheit, welche größer ist als 0,65 und eine Inhomogenität, welche geringer ist als 0,25 und einen Streulichtanteil, welcher geringer ist als 0,15,
-   besonders bevorzugt eine Rundheit, welche größer ist als 0,85 und eine Inhomogenität, welche geringer ist als 0,2 und einen Streulichtanteil, welcher geringer ist als 0,05.

Die Erfindung betrifft ferner eine Beleuchtungseinrichtung oder ein optisches Element gemäß der vorstehenden Beschreibung, wobei die Abmessung des optischen Elements senkrecht zur optischen Achse, insbesondere senkrecht zur optischen Achse der Lichteintrittsfläche, kleiner ist als 10 Millimeter, vorzugsweise kleiner ist als 7 Millimeter, besonders bevorzugt kleiner ist als 6 Millimeter, um einen Einbau hinter einer Verkleidung, z.B. der Innenraumverkleidung, insbesondere der Kabinenverkleidung des Flugzeugs, in oder an einem Sitz, z.B. einem Flugzeugsitz, zu ermöglichen, vorzugsweise derart, dass die optische Achse der Lichteintrittsfläche parallel zur Innenraumverkleidung verläuft und/oder die optische Achse der Lichtaustrittsfläche schräg zu der Innenraumverkleidung verläuft.

Die Erfindung betrifft ferner die Verwendung einer Beleuchtungseinrichtung oder eines optischen Elements wie vorstehend beschrieben zum Einbau hinter einer Verkleidung, z.B. einer Innenraumverkleidung mit einer Lichtaustrittsöffnung, z.B. in eine Kabinenverkleidung einer Flugzeugkabine, in oder an einem Sitz, z.B. einen Flugzeugsitz.

Schließlich betrifft die Erfindung ein Diagnose-, Operations- und/oder Therapiegerät umfassend eine Beleuchtungseinrichtung oder ein optisches Element wie vorstehend beschrieben, wobei vorzugsweise das optische Element ein Pb- bzw. Schwermetall-freies Kernglas und/oder Mantelglas umfassen oder aus einem solchen bestehen und/oder wobei vorzugsweise das optische Element ein Glassystem umfasst oder aus einem solchen besteht, welches für das zu leitende Licht einen Akzeptanzwinkel $2\alpha$ von größer 80°, besonders bevorzugt von größer 100° aufweist.

Die Erfindung wird nachfolgend anhand einiger Figuren näher erläutert. Dabei zeigen:

Fig. 1       Schema einer Beleuchtungseinrichtung, welche hinter einer Wandung mit einer Lichtaustrittsöffnung angeordnet ist, wobei die Beleuchtungseinrichtung eine Linse umfasst,

Fig. 2       Schema einer Beleuchtungseinrichtung, welche hinter einer Wandung mit einer Lichtaustrittsöffnung angeordnet ist, wobei die Beleuchtungseinrichtung ein optisches Element mit einer Vielzahl von Lichtleitelementen umfasst,

Fig. 3       Schema einer weiteren Beleuchtungseinrichtung, welche hinter einer Wandung mit einer Lichtaustrittsöffnung angeordnet ist, wobei die Beleuchtungseinrichtung eine Linse umfasst,

Fig. 4       Schema einer weiteren Beleuchtungseinrichtung, welche hinter einer Wandung mit einer Lichtaustrittsöffnung angeordnet ist, wobei die Beleuchtungseinrichtung ein optisches Element mit einer Vielzahl von Lichtleitelementen umfasst,

Fig. 5       ein optisches Element bestehend aus einem einzelnen Lichtleitelement,

Fig. 6       ein optisches Element mit einer Vielzahl von Lichtleitelementen,

Fig. 7       ein gekrümmtes optisches Element bestehend aus einem einzelnen Lichtleitelement,

Fig. 8        ein gekrümmtes Lichtleitelement eines optischen Elements mit einer Vielzahl von Lichtleitelementen,

Fig. 9        ein optisches Element mit einem Aufweitungsabschnitt und einem Krümmungsabschnitt,

Fig. 10       ein optisches Element mit einem Aufweitungsabschnitt, einem Krümmungsabschnitt und mehreren Linearabschnitten,

Fig. 11       eine schematische Verteilung der Lichtintensität in einer Ebene senkrecht zur sekundären optischen Achse,

Fig. 12       eine schematische Verteilung der Lichtintensität in einer Ebene senkrecht zu Fig. 11,

Fig. 13-25    beispielhafte schematische Verteilungen gemäß den Darstellungen in Fig. 11 und 12, welche durch Computerexperiment erzeugt wurden,

Fig. 26       beispielhafte Werte der Inhomogenität aufgetragen gegen den Quotienten aus Krümmungsradius und Faserkernradius,

Fig. 27       beispielhafte Werte der Rundheit aufgetragen gegen den Quotienten aus Krümmungsradius und Faserkernradius,

Fig. 28       beispielhafte Werte des Streulichtanteils aufgetragen gegen den Quotienten aus Krümmungsradius und Faserkernradius,

Fig. 29-30    beispielhafte Werte der optischen Effizienz aufgetragen gegen die Manteldicke,

Fig. 31       Schema eines Krümmungsabschnitts innerhalb dessen die optische Achse gebogen verläuft und dem zugehörigen äquivalenten Krümmungsradius.

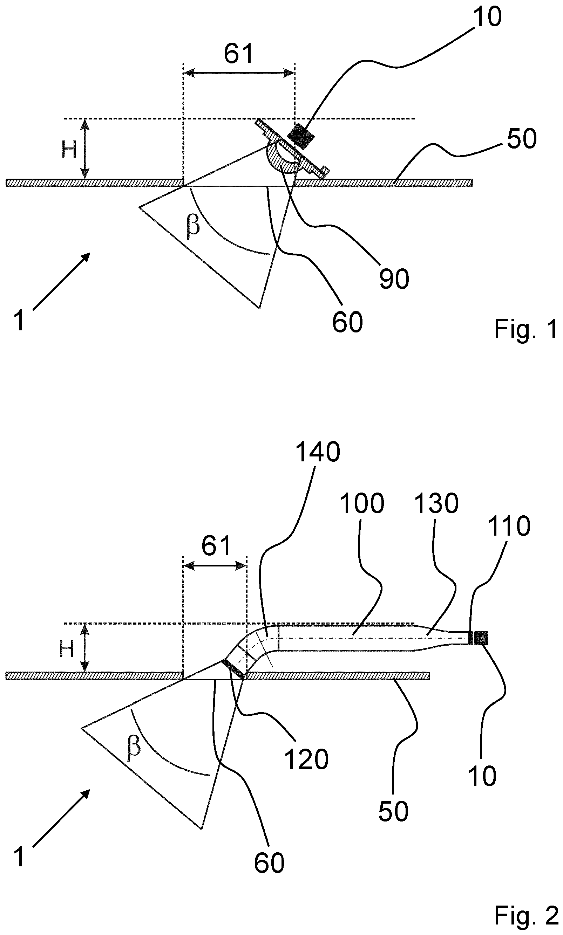

Fig. 1 zeigt eine Beleuchtungseinrichtung 1 welche hinter einer Wandung 50 mit einer Lichtaustrittsöffnung 60, beispielsweise einer Innenraumverkleidung eines Flugzeugs, angeordnet ist. Die Beleuchtungseinrichtung 1 umfasst eine Lichtquelle 10 und eine Linse 90, um die Divergenz des von der Lichtquelle 10 abgestrahlten Lichts zu vermindern und einen engeren Abstrahlwinkel $\beta$ zu ermöglichen. Da in diesem Beispiel ein schräger Lichtaustritt gewünscht ist, ist die Beleuchtungseinrichtung 1 schräg hinter der Wandung 50 verbaut. Ursächlich hierfür ist, dass bei einem Aufbau mit Linsen die Strahlrichtung typischerweise vorgegeben ist und somit die Geometrie der Beleuchtungseinrichtung wenig flexibel ist, solange keine weiteren Elemente, wie bspw. Spiegeln vorgesehen sind, die aber wiederum die Komplexität erhöhen, und zumindest bei Planspiegeln auch die Abstrahlcharakteristik kaum ändern. Nachteilig an der Lösung mit einem schrägen Aufbau ist, dass der Bauraum für die Beleuchtungseinrichtung 1, insbesondere die Höhe H relativ hoch ist. Ein weiterer Nachteil liegt darin, dass die Abmessung 61 der Lichtaustrittsöffnung 60 für den Abstrahlwinkel $\beta$ relativ groß ist, weil die Linse 90 aufgrund der Schrägstellung einen relativ großen Abstand zu der Öffnung 60 aufweist.

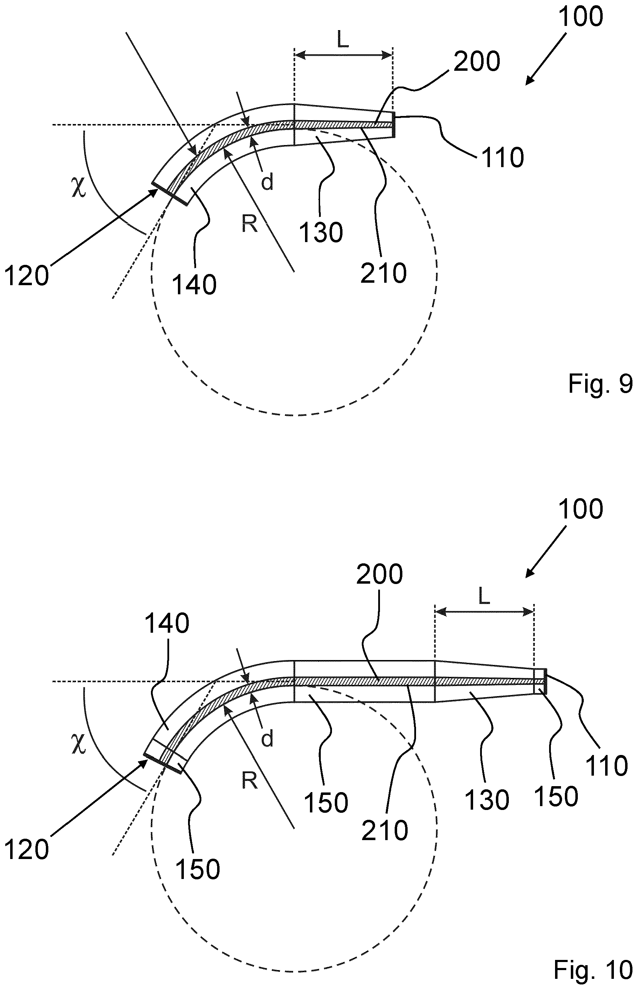

Fig. 2 zeigt demgegenüber eine erfindungsgemäße Beleuchtungseinrichtung 1 mit einer Lichtquelle 10 und einem optischen Element 100. Die Lichtquelle kann z.B. eine oder mehrere LEDs umfassen oder allgemein halbleiterbasierte Lichtquellen. Das optische Element 100 ist als Lichtleiter ausgebildet, derart, dass das von der Lichtquelle 10 eingekoppelte Licht durch Reflexion an zwischen der Lichteintrittsfläche 110 und der Lichtaustrittsfläche 120 verlaufenden Grenzflächen einzelner Lichtleitelemente (vgl. Fig. 10) entlang der optischen Achse des optischen Elements 100 geleitet wird. Hierdurch kann die Lichtquelle 10 an einem von der Lichtaustrittsöffnung 60 nahezu beliebig weit entfernten proximalen Ende des optischen Elements angeordnet sein 100, was auch den Vorteil mit sich bringt, dass die Wärmeabführung nicht unmittelbar hinter der Wandung 50 an der Öffnung 60 erfolgt. Das optische Element 100 dient neben der Lichtleitung zugleich dazu, die Abstrahlcharakteristik der Lichtquelle 10 zu modifizieren, so dass bspw. der Abstrahlwinkel der Lichtquelle reduziert werden kann, um einen engen Abstrahlwinkel $\beta$ zu erhalten. Dazu weist die Beleuchtungseinrichtung 1 einen Aufweitungsabschnitt 130 auf in welchem der Querschnitt des optischen Elements 100 zunimmt. Die Beleuchtungseinrichtung 1 weist in dem dargestellten Beispiel zudem einen Krümmungsabschnitt 140 auf, um den gewünschten schrägen Lichtaustritt zu ermöglichen. Mit der erfindungsgemäße Beleuchtungseinrichtung 1 ist somit eine geringe Bauhöhe H möglich. Da die Lichtaustrittsfläche 120 unmittelbar an die Öffnung 60 angrenzen kann wird zudem eine kleine Abmessung 61 der Lichtaustrittsöffnung 60 ermöglicht.

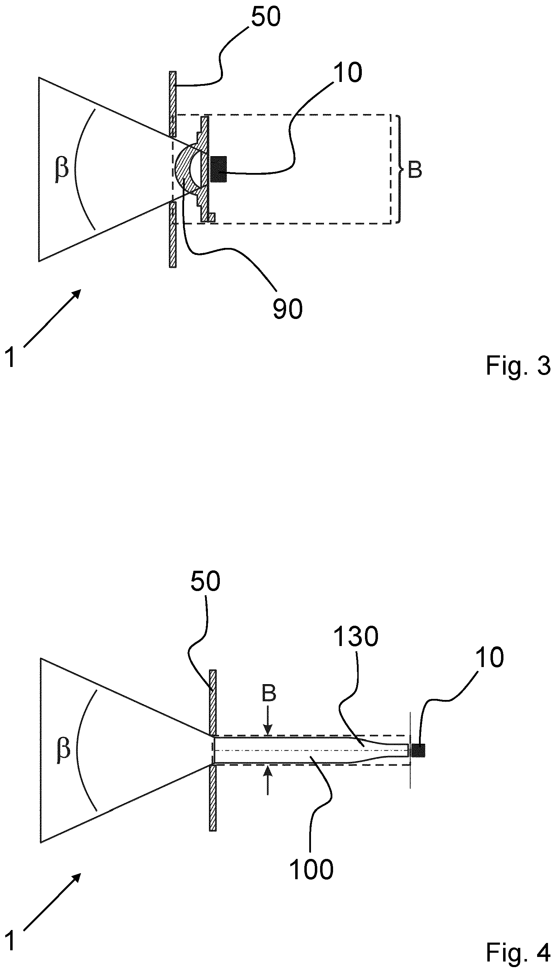

Fig. 3 zeigt eine weitere Beleuchtungseinrichtung 1 mit einer Linse 90, welche einen senkrechten Lichtaustritt aus einer Öffnung einer Verkleidung 50 ermöglicht. Nachteilig an dieser Lösung ist, dass ein relativ großer Bauraum bezüglich der Breite B hinter der Verkleidung 50 nötig ist. Zudem ist auch in diesem Fall eine relativ große Öffnung aufgrund des Abstands der Linse 90 zu der Lichtaustrittsöffnung erforderlich.

Fig. 4 zeigt demgegenüber wiederum eine erfindungsgemäße Beleuchtungseinrichtung 1 mit einem geradlinig ausgebildeten optische Element 100. Dies ermöglicht es, den nötigen Bauraum in der Breite B sowie die Größe der Lichtaustrittsöffnung zu reduzieren.

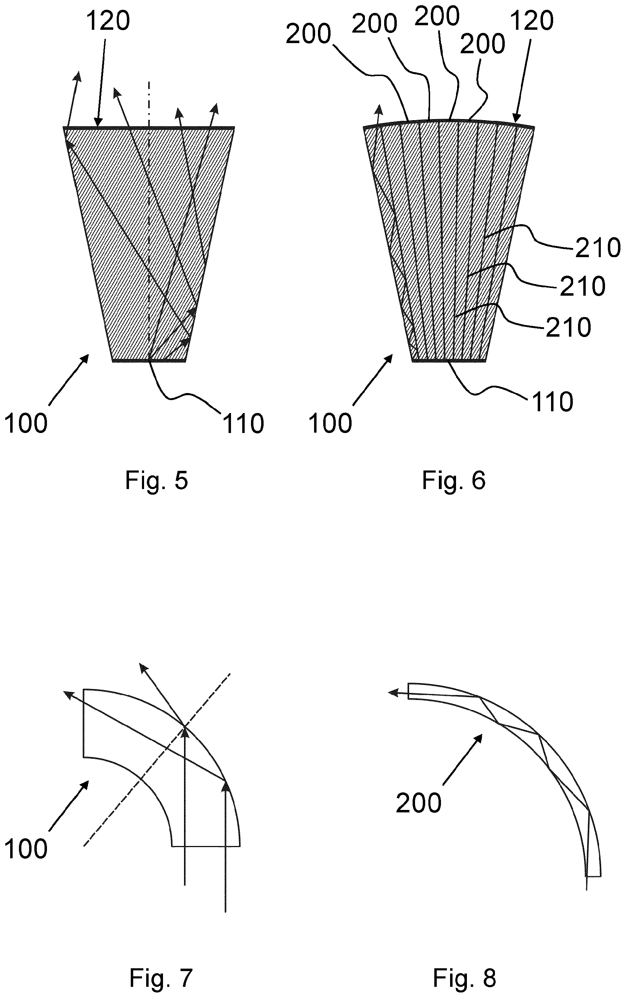

Fig. 5 zeigt ein optisches Element 100, welches nur einen einzelnen Lichtleiter umfasst. Das optische Element ist in diesem Fall als monolithischer, konischer Lichtleiter ausgebildet. Ein Lichtstrahl erfährt aufgrund der Aufweitung des Querschnitts mit jeder Reflexion an der Außenfläche eine Reduktion zur Mittelachse. Im dargestellten Kegel mit um 10° geneigten Außenflächen wird der Winkel bei jeder Reflexion im Betrag um 20° reduziert. Die Zahl der Reflektionen liegt in diesem Beispiel allerdings nur bei 0 bis 2.

Da beim Übergang ins optisch dichtere Medium (Glas oder Kunststoff des Lichtleiters mit einer Brechzahl üblicherweise zwischen 1,4 und 2,0) der Lichtstrahl zur optischen Achse abgelenkt wird, liegt der maximal auftretende Winkel im Lichtleiter bei 30° bis 50°. Eine typische LED mit lambertscher Abstrahlung emittiert 75% ihrer Strahlungsleistung in einen Winkelbereich von 0° bis ± 60°. Nach dem Übergang ins optische Medium liegt damit der größte Teil der Winkel zwischen 0° und ± 25° (Brechzahl 2,0) und ± 38° (Brechzahl 1,4).

Soll Licht einer LED beispielsweise so stark kollimiert werden, dass der ursprüngliche Emissionswinkel von ±60° auf ±20° oder ±15° reduziert wird, wäre ein Kegel mit einem Verhältnis aus Durchmesser der Eintrittsfläche 110 zu Durchmesser der Austrittsfläche 120 von 1:2,5 oder 1:3,4 nötig. Wenn der Kegel eingangsseitig einen Durchmesser von 1 mm aufweist, ergibt sich damit am Ausgang ein Durchmesser von 2,5 mm bzw. 3,4 mm.

Wird nun beispielsweise eine Außenfläche mit einer Neigung von 1° gewählt, so ergibt sich damit rechnerisch eine Höhe des Kegels von über 40 mm (2,5 mm Ausgangsseite) oder knapp 70 mm (3,4 mm Ausgangsseite). Selbst bei solchen Längen wird ein großer Teil der Strahlen nur 5 Mal oder weniger reflektiert. Dies führt zu einer Winkeldiskretisierung und damit zu einer Bildung von hellen und dunklen Ringen im Fernfeld. Auf der anderen Seite steht in vielen Leuchten ein Bauraum von 40 mm oder 70 mm für optische Elemente gar nicht zur Verfügung.

Fig. 6 zeigt demgegenüber ein optisches Element 100 mit einer Vielzahl an Lichtleitelementen 200, welche jeweils eine Grenzfläche 210 zur Reflexion von Licht aufweisen.

Wenn das optische Element nicht monolithisch ausgebildet ist, sondern aus einzelnen Fasern 200 aufgebaut ist, von denen jede durch ihren Kern und Mantel ein nahezu geschlossenes optisches System darstellt, reduziert sich der Durchmesser jedes einzelnen Faserkegels 200 um den Faktor 1/Wurzel (Zahl der Fasern). Für eine beispielhafte Faseranzahl von 1000 bedeutet dies eine Reduktion des Durchmessers um einen Faktor über 30.

Hätte die Außenfläche jeder Einzelfaser 200 nun einen Neigungswinkel von 1° wie im obigen Beispiel der monolithischen Kegel, könnte das optische Element von 40 mm bzw. 70 mm auf 1,3 mm bis etwas über 2 mm verkürzt werden.

Für die Herstellbarkeit der Kegel kann jedoch eine Neigung der Kegelfläche um 10° bis 30° vorteilhaft sein. Die Länge des Kegels liegt dann im Bereich von 1,3 mm (1:2,5 mit 30° Neigung) bis knapp 7 mm (1:3,4 mit 10° Neigung). Sie ist damit deutlich kürzer als für monolithische Kegel. Wird der Kegel mit einer Länge von 10 mm gewählt, erhält man zudem ein deutlich größeres Aspektverhältnis (Länge des Kegels : Durchmesser des optischen Elements an der Eingangsseite), da beim monolithischen Kegel der Gesamtdurchmesser (in diesem Beispiel 1 mm) beim Faserelement aber nur der Durchmesser der Einzelfaser (in diesem Beispiel ca. 0,03 mm) zu berücksichtigen ist. Das Aspektverhältnis für den 10 mm langen Faserkegel beträgt 300 : 1, im Vergleich zu 40 : 1 bzw. 70 : 1 für einen monolithischen Kegel. Dadurch wird die Zahl der internen Reflexionen erhöht und damit auch eine Ringbildung minimiert. Das Ergebnis ist ein wesentlich kleineres und damit mit dem Bauraum kompatibles optisches Element 100 mit einer deutlich verbesserten optischen Funktion.

Fig. 7 zeigen ein optisches Element 100, welches als monolithischer Lichtleiter mit einer Biegung ausgebildet ist. Der Biegeradius ist in der Größenordnung des Lichtleiterdurchmessers. Die Einhaltung der Totalreflexionsbedingung ist nicht in jedem Fall gegeben. Die Umlenkung erfolgt über wenige Reflexionen. Das führt zu einer Aufweitung der Winkel.

Fig. 8 zeigt demgegenüber ein exemplarisches Lichtleitelement 200 eines optischen Elements, welches eine Vielzahl von Lichtleitelementen 200 umfasst, also z.B. als Lichtleiter aus Einzelfasern aufgebaut ist. In der Einzelfaser 200 wird das Licht durch viele Einzelreflexionen bei gleichem Beigeradius unter Erhaltung des Winkels zur optischen Achse der Faser geführt.

Im Gegensatz zu einem monolithischen Lichtleiter kann so Licht in einem faseroptischen Lichtleiter demnach effizienter bzw. mit geringeren Verlusten und ohne Aufweitung des Strahlkegels um enge Biegeradien geführt werden. Ein faseroptischer Lichtleiter mit einem Durchmesser 3 mm kann mit einem Biegeradius von 3 mm auf der inneren Seite gebogen werden. Dadurch kann eine Strahlumlenkung in begrenztem Bauraum erfolgen.

Während demnach auch ein monolithisches optisches Element 100 grundsätzlich für spezielle Ausführungsformen in Betracht kommt, ist es, insbesondere im Fall einer Krümmung, vorteilhaft, wenn das optische Element 100 eine Vielzahl individueller Lichtleitelemente 200 umfasst.

Fig. 9 zeigt ein erfindungsgemäßes optisches Element 100 umfassend einen Aufweitungsabschnitt 130 innerhalb dessen der Querschnitt d der Lichtleitelemente und der Querschnitt des optischen Elements zunimmt, in diesem Beispiel jeweils konusförmig zunimmt, und umfassend einen Krümmungsabschnitt 140 innerhalb dessen die optische Achse des optischen Element 100 gebogen verläuft, in diesem Beispiel auf einem Kreisbogen mit dem Radius R verläuft. Das optische Element 100 weist eine Vielzahl von Lichtleitelementen 200 auf, von denen eines exemplarisch in der Figur hervorgehoben ist. Die Lichtleitelemente weisen jeweils einen Kern und einen Mantel mit unterschiedlichen Brechungsindizes auf.

Der Lichtleiter umfasst eine Vielzahl, z.B. 100 bis 10000 oder 500 bis 5000 Lichtleitelemente 200, welche z.B. als Einzelfasern ausgebildet sein können, die in einem gemeinsamen Ziehprozess miteinander verschmolzen sind. In dem konischen Aufweitungsabschnitt 130 ändert sich der Durchmesser des Gesamtlichtleiters und proportional dazu auch derjenige der Einzelfasern. Die Änderung des Durchmessers kann z.B. zwischen 1:1,5 und 1:10 betragen oder auch zwischen 1:2 und 1:5.

Die Lichteintrittsfläche 110 (Umkreis oder Inkreis) kann mindestens so groß sein, dass die gesamte Lichteintrittsfläche von der leuchtenden Fläche einer Lichtquelle, also z.B. einem LED-Chip bedeckt wird (maximale Helligkeit pro Fläche, Lichtverluste in den Ecken des LED-Chips). Ferner kann die Lichteintrittsfläche 110 vorzugsweise höchstens so groß sein, dass die gesamte Fläche des leuchtenden LED-Chips vom Lichtleiter bedeckt wird (maximale Effizienz, dunkle Bereiche im Lichtleiter).

Das optische Element 100 ist ferner vorzugsweise in einem nichttransparenten Gehäuse verbaut, das nur an der lichtemittierenden Stirnseite (Lichtaustrittsfläche 120) eine optische Öffnung enthält, aus der das Licht austreten kann. Das Gehäuse kann teilweise ein transparentes Material (Glas oder Kunststoff) umfassen und im nicht-lichtemittierenden Bereich durch eine Oberflächenbehandlung (Druck, Lackierung, Ätzung, Sandstahlen, Beschichtung, Bedampfung, etc.) nicht transparent ausgebildet sein. Der Übergang kann fließend ausgebildet sein.

Wie ebenfalls in Fig. 9 dargestellt kann das optische Element 100 gebogen sein, bevorzugt im Bereich des größeren Durchmessers, aber auch möglich im Bereich des kleineren Durchmessers oder auch im Bereich der Aufweitung, um das Licht in eine Richtung zu lenken, die nicht der ursprünglichen Abstrahlrichtung der Lichtquelle entspricht.

Das optische Element 100 kann auf der der Lichtquelle 10 zugewandten Seite eckig ausgeführt sein, um gleichzeitig eine möglichst hohe Effizienz und minimale Anzahl an dunklen Bereichen zu erzielen. Dies kann z.B. durch eine Heißformgebung (Pressen) des Lichtleiters erreicht werden.

Das optische Element 100 kann durch ein transparentes Material z.B. ein Silikon optisch an den LED-Chip angebunden werden, um Reflexionsverluste zu minimieren. Diese Verbindung kann auch als Klebeverbindung mit mechanischer Funktion ausgeführt sein.

Dem optischen Element 100 kann ein Streuelement oder ein anderes optisches Element, bspw. eine fest oder variable Blende, nachgeordnet sein, um bei vorhandenem Lichtleiter die Breite des Lichtkegels variieren zu können. Das Streuelement kann zudem dazu dienen, den Rand des Leuchtflecks weicher zu gestalten oder unerwünschte Farbfehler zu kaschieren.

Die Lichtleiter verschiedenen LEDs zugeordneten Lichtleiter können sich in ihren Aspekten unterscheiden, wenn den LEDs unterschiedliche Funktionen zugeordnet sind. Der Lichtleiter kann gepresst sein. Der Lichtaustritt kann geformt werden. Der Lichtleiter kann auf der Transportstrecke beliebig geformt sein, um das Licht durch einen beengten Bauraum zu transportieren.

Fig. 10 zeigt ein weiteres erfindungsgemäßes optisches Element 100 welches in vielen Aspekten dem optischen Element 100 aus Fig. 9 ähnlich ist. Es umfasst zudem Linearabschnitte 150, welche jeweils eine gerade optische Achse aufweisen. Die Linearabschnitte 150 am proximalen und distalen Ende können sehr kurz ausgebildet sein; sie können produktionstechnisch bedingt sein und haben in diesem Fall vorzugsweise keine nennenswerte optische Auswirkung. Der mittlere Linearabschnitt 150 überbrückt geometrisch den Abstand zwischen Lichtquelle und Lichtaustritt im Aufbau der Leuchte. Dieses gerade Stück kann aufgrund der Absorption im Mantel eine Auswirkung auf die Winkelverteilung haben. Da aber im optisch vorgeschalteten Kegel, die Winkel bereits deutlich reduziert bzw. sehr hohe Winkel im Mantel absorbiert werden, hat dieses Stück vorzugsweise ebenfalls keinen nennenswerten Einfluss auf die Lichtverteilung.

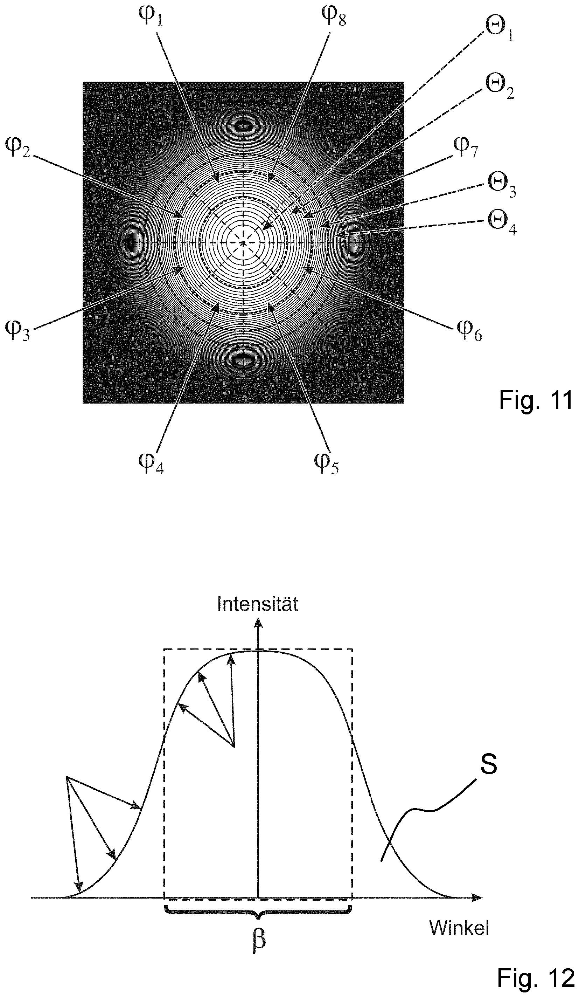

Fig. 11 zeigt eine schematische Verteilung der Lichtintensität in einer Ebene senkrecht zur optischen Achse. Zur Berechnung einer Inhomogenität der sekundären Abstrahlcharakteristik werden insbesondere die gezeigten azimutalen Raumwinkelsegmente $\theta_1$, $\theta_2$, $\theta_3$, $\theta_4$ herangezogen. Zur Berechnung einer Rundheit werden insbesondere die gezeigten polaren Raumwinkelsegmente $\varphi_1$, $\varphi_2$, $\varphi_3$, $\varphi_4$, $\varphi_5$, $\varphi_6$, $\varphi_7$, $\varphi_8$ herangezogen.

Fig. 12 zeigt eine schematische Verteilung der Lichtintensität in einer Ebene senkrecht zu der in Fig. 11 gezeigten Verteilung. Der Abstrahlwinkel ist mit $\beta$ bezeichnet und kann festgelegt werden, beispielsweise derart, dass innerhalb des Abstrahlwinkels 90% des Lichts anzutreffen ist. Das Licht außerhalb davon wird dann als Streulicht S bezeichnet.

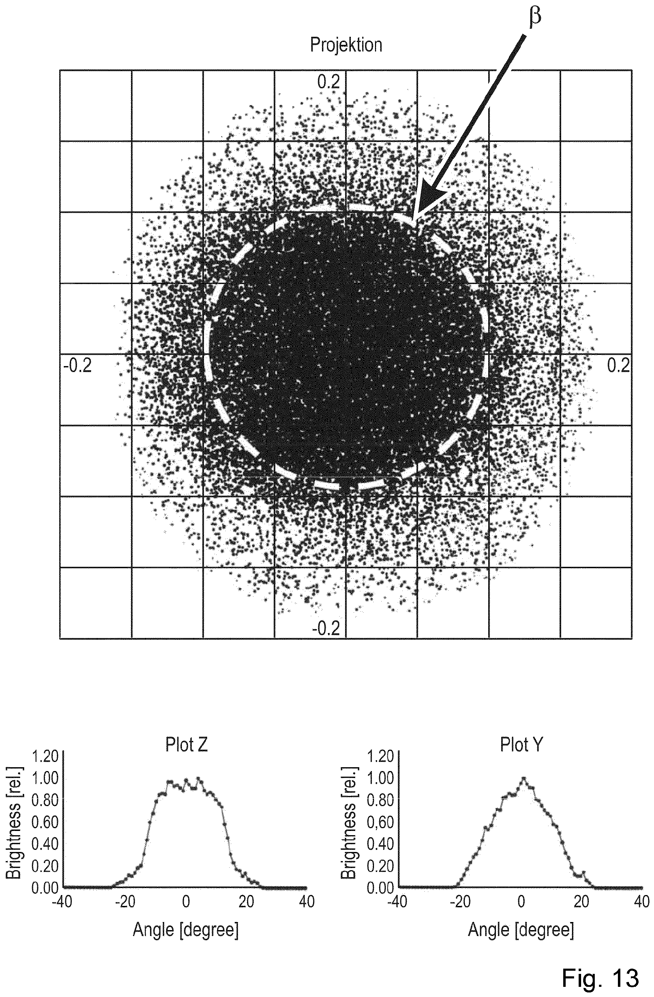

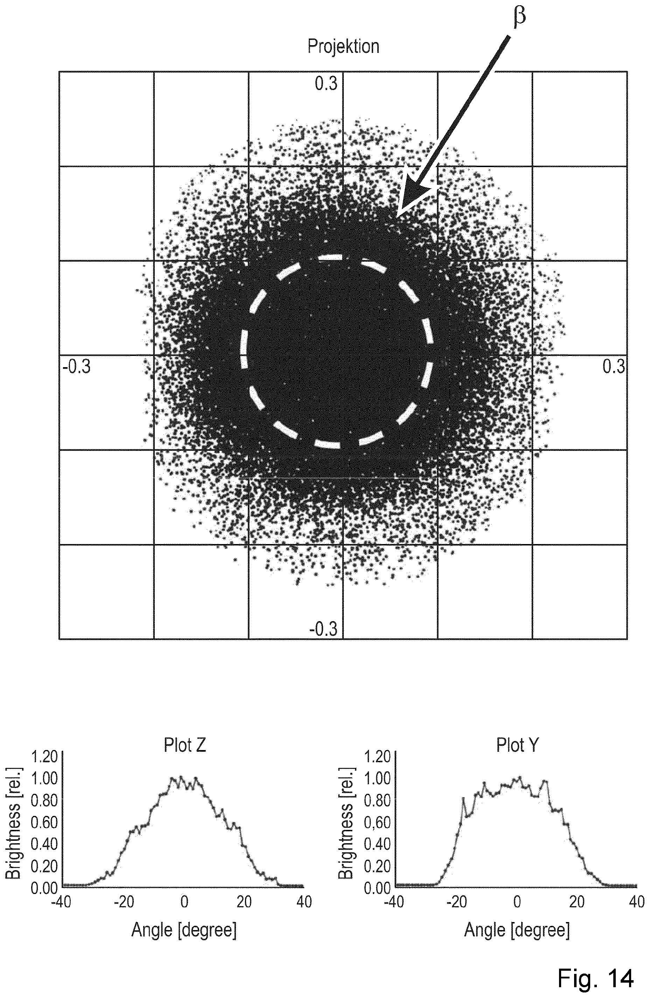

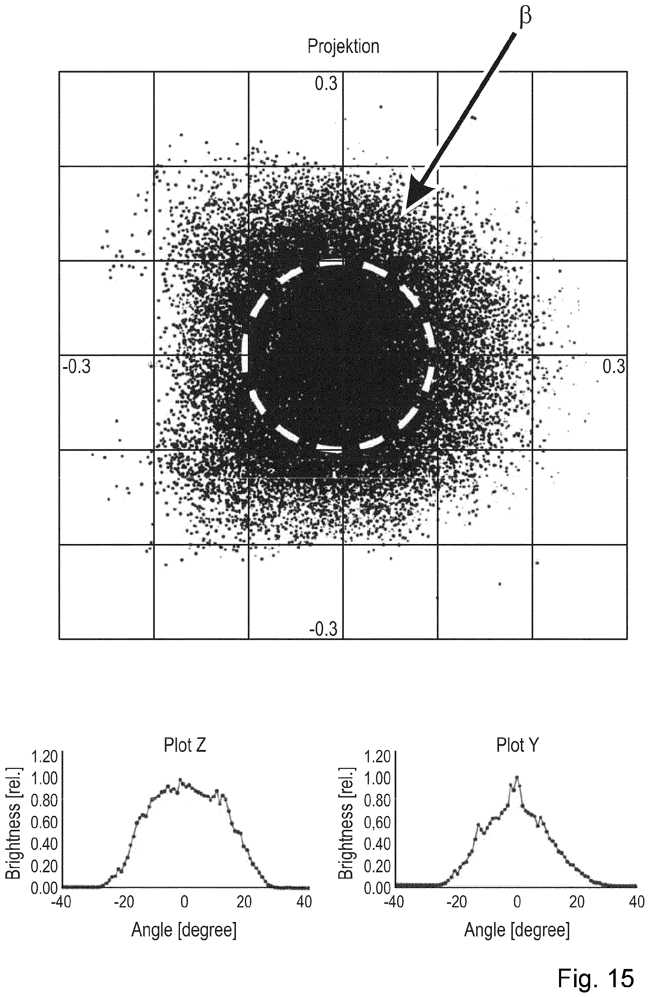

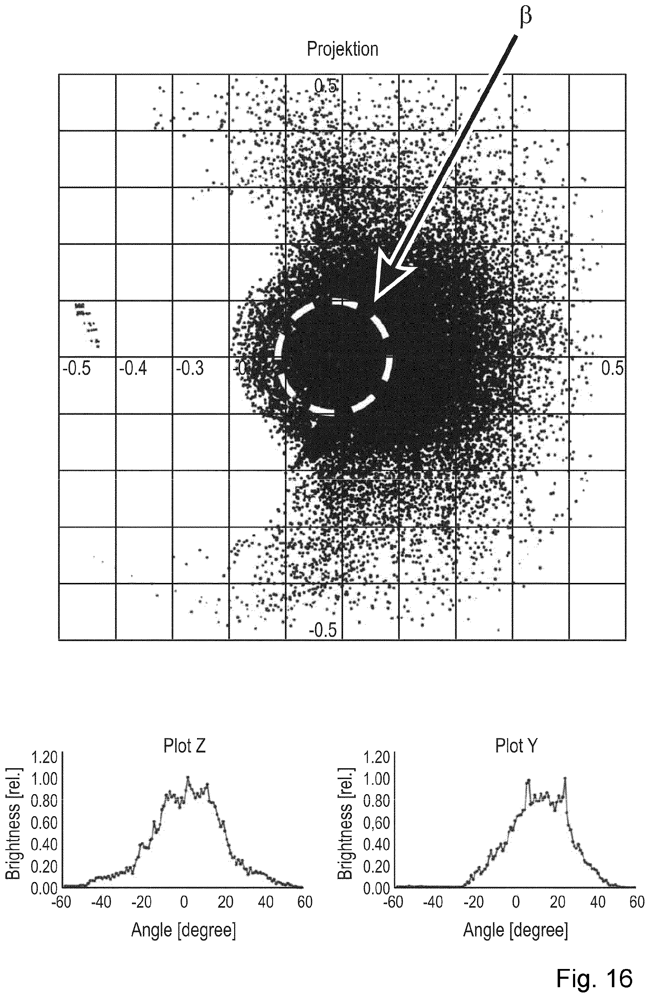

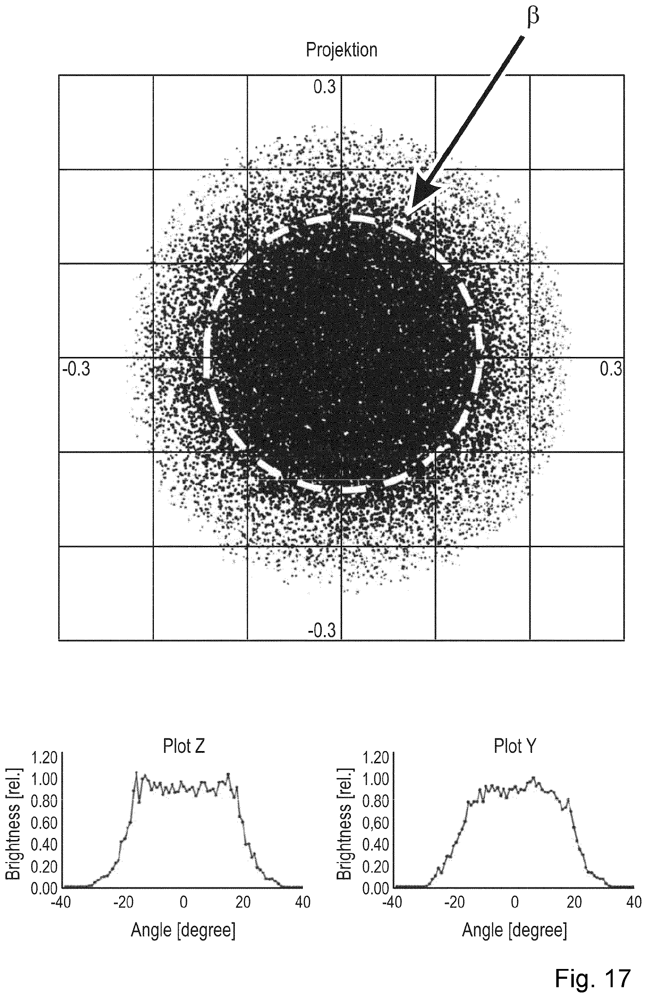

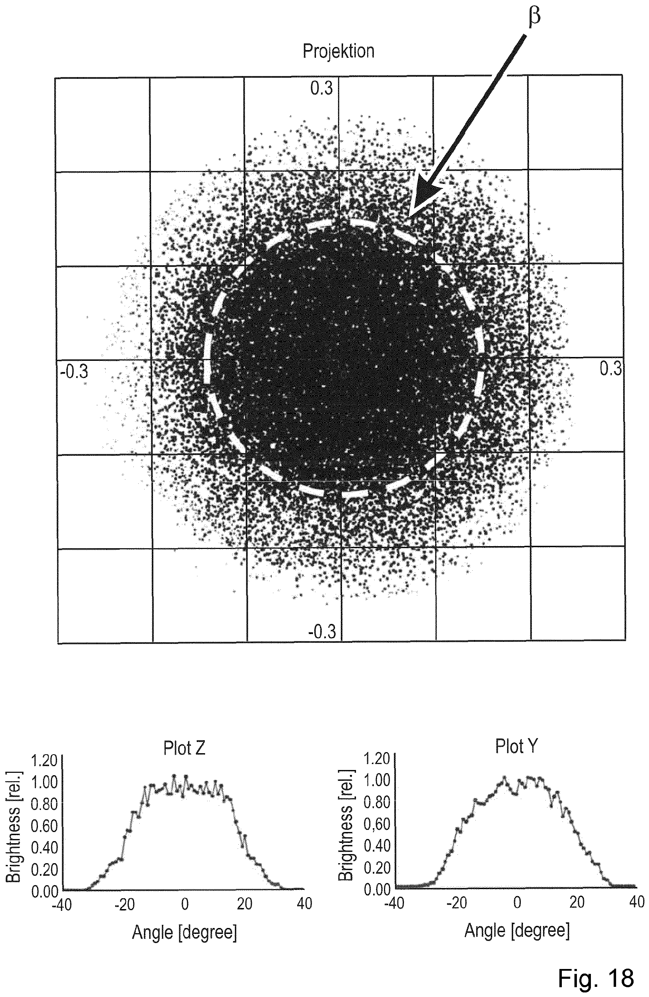

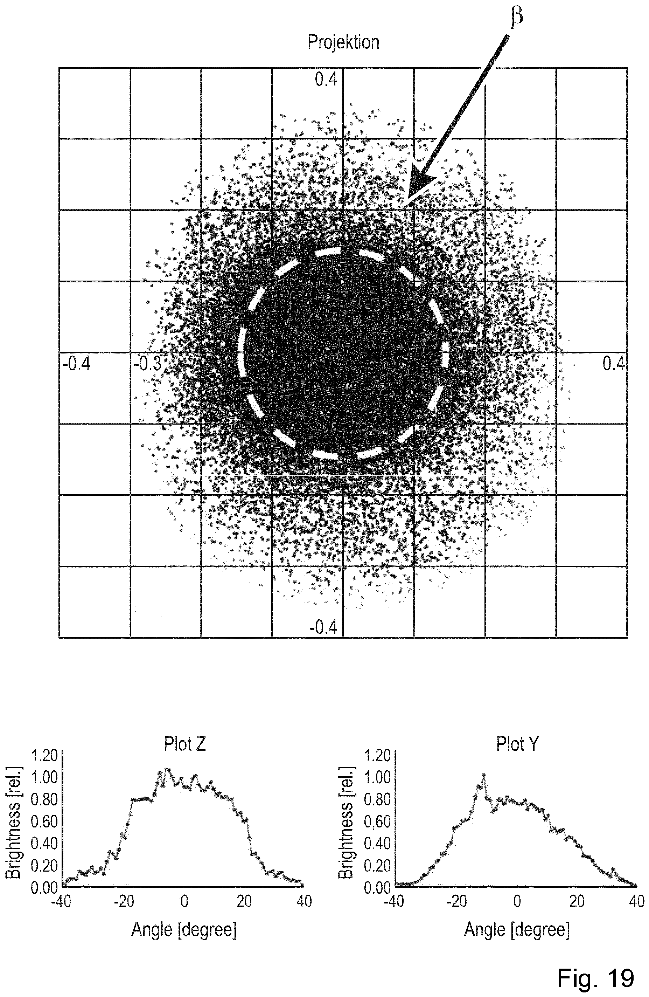

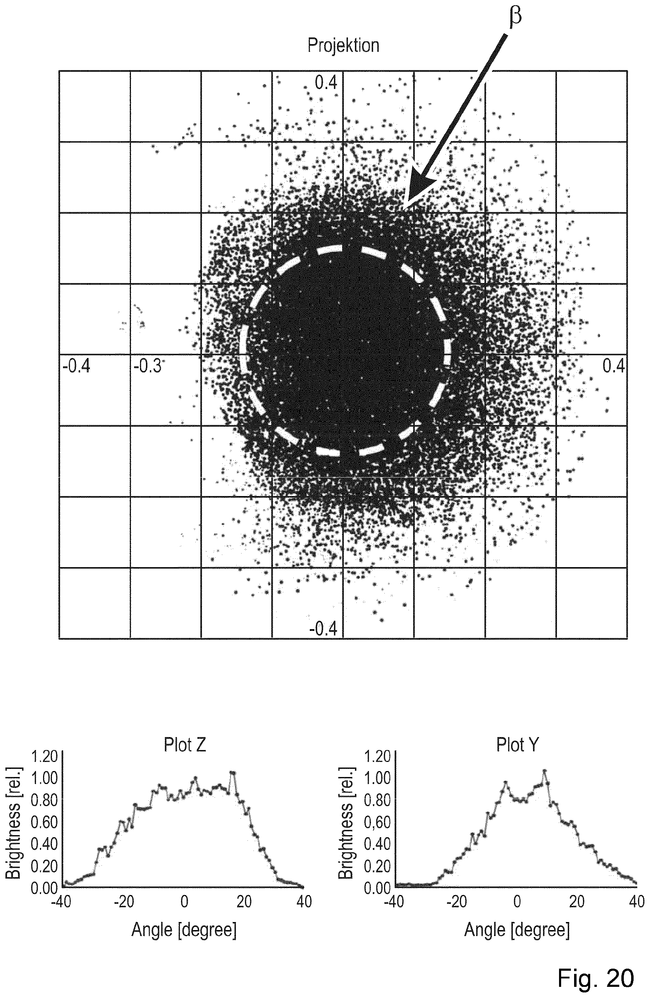

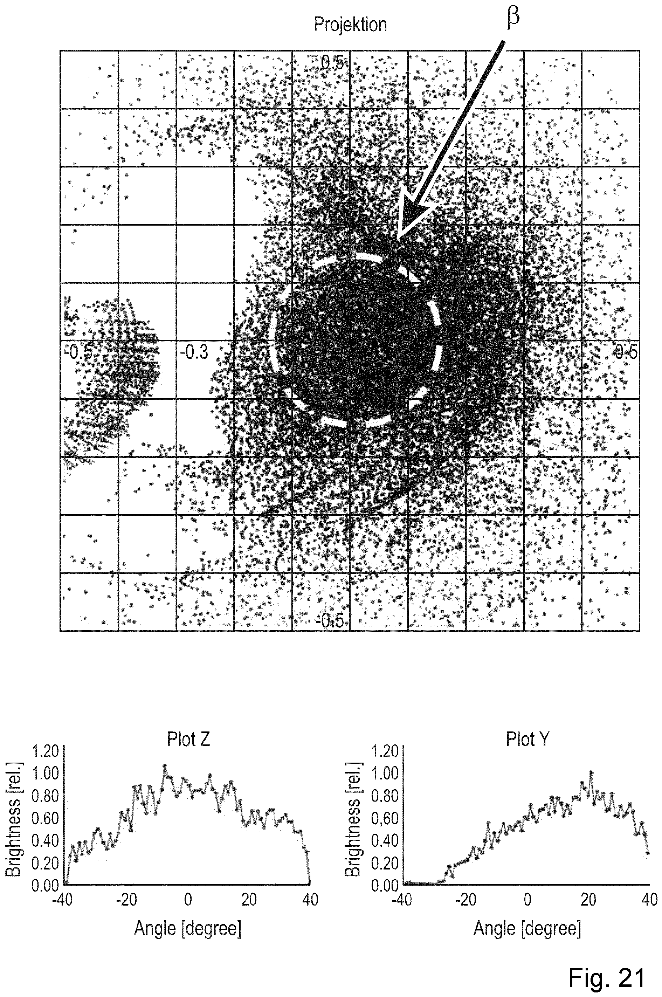

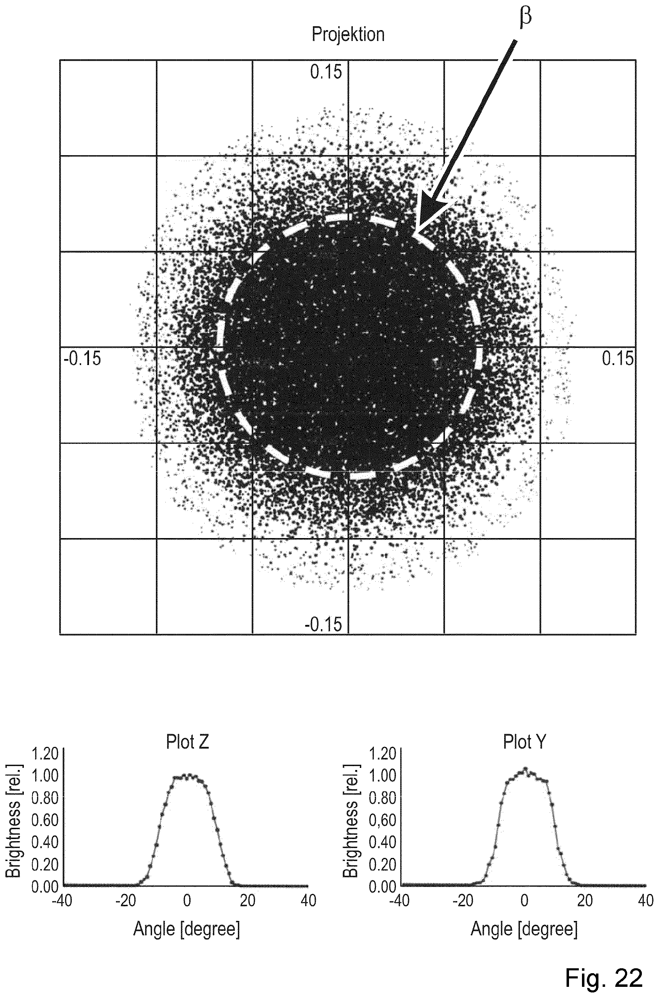

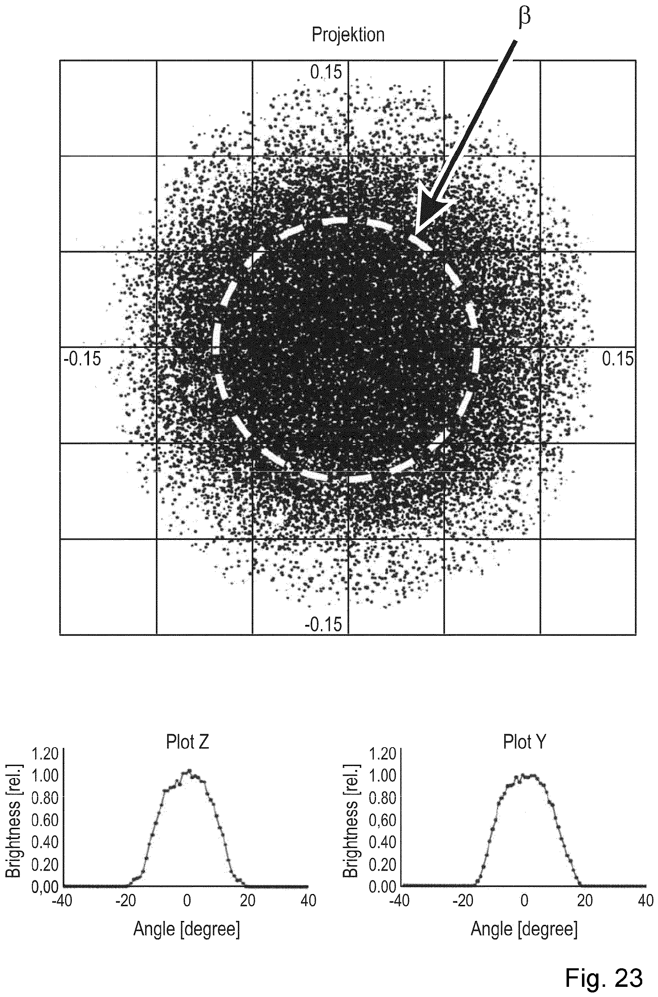

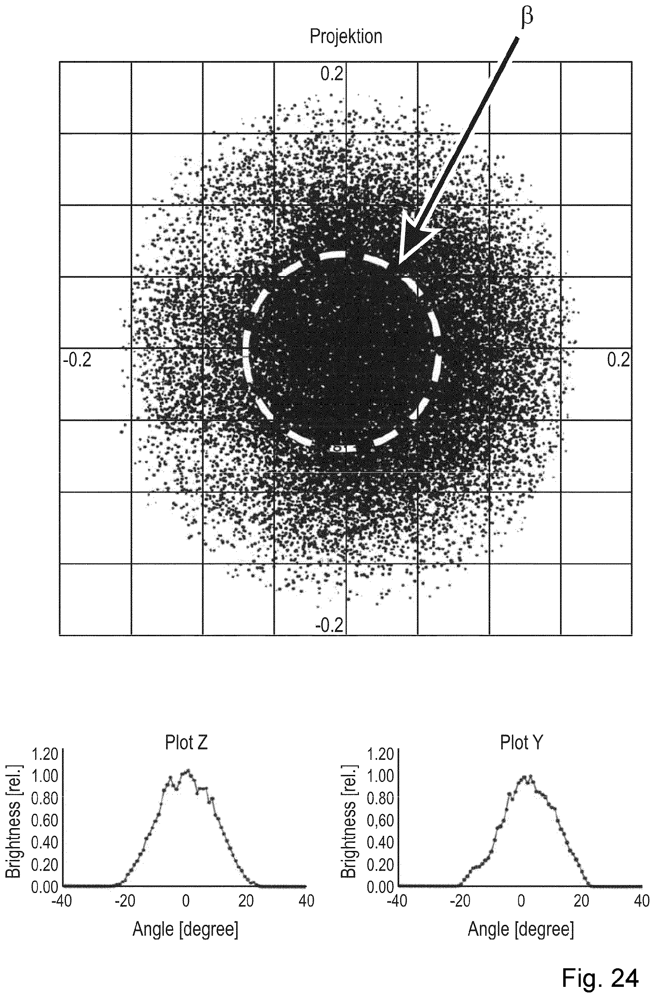

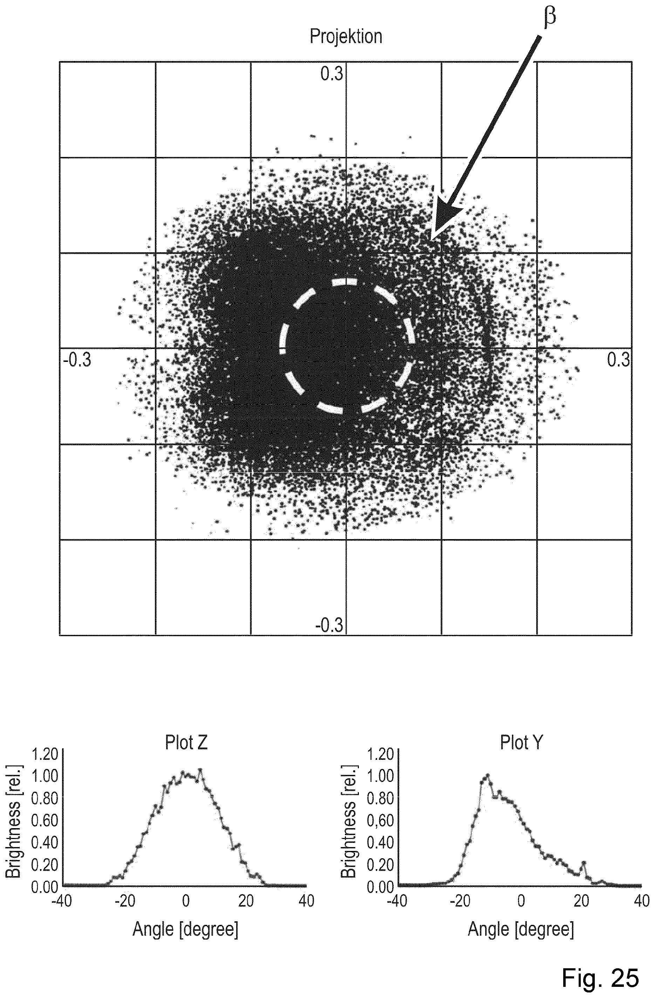

Die Fig. 13 bis 25 zeigen beispielhafte schematische Verteilungen gemäß den Ebenen in Figur 11 und 12, welche anhand eines optischen Systems gemäß Figur 9 durch Computersimulation erzeugt wurden, wobei der Kernradius an der Lichteintrittsfläche und der Kernradius an der Lichtaustrittsfläche variiert sind. Die den Figuren zugrundeliegenden Parameter sind nachfolgend aufgeführt, wobei bezugnehmend auf die Fig. 9 und 10 die Aufweitungslänge der Länge des Aufweitungsabschnitts entspricht (L), der Biegungsradius dem (äquivalenten) Krümmungsradius des Krümmungsabschnitts entspricht (R), der Biegungswinkel dem Winkel zwischen der optischen Achse der Lichteintrittsfläche und der optischen Achse der Lichtaustrittsfläche ($\chi$) entspricht und der Kernradius dem Radius eines Kerns eines Lichtleitelements im optischen Element entspricht:

| Fig. 13 | Kegel | Biegung |
|---|---|---|
| Aufweitungslänge | 5.00E-03 m | |
| Kernradius Lichteintritt | 1.500E-05 m | 4.500E-05 m |
| Kernradius Lichtaustritt | 4.500E-05 m | |
| Biegungsradius | | 4.500E-03 m |
| Biegungswinkel | | 40.00° |

| Fig. 14 | Kegel | Biegung |
|---|---|---|
| Aufweitungslänge | 5.00E-03 m | |
| Kernradius Lichteintritt | 3.000E-05 m | 9.000E-05 m |
| Kernradius Lichtaustritt | 9.000E-05 m | |
| Biegungsradius | | 4.500E-03 m |
| Biegungswinkel | | 40.00° |

| Fig. 15 | Kegel | Biegung |
|---|---|---|
| Aufweitungslänge | 5.00E-03 m | |
| Kernradius Lichteintritt | 6.000E-05 m | 1.800E-04 m |
| Kernradius Lichtaustritt | 1.800E-04 m | |
| Biegungsradius | | 4.500E-03 m |
| Biegungswinkel | | 40.00° |

| Fig. 16 | Kegel | Biegung |
|---|---|---|
| Aufweitungslänge | 5.00E-03 m | |
| Kernradius Lichteintritt | 1.200E-04 m | 3.600E-04 m |
| Kernradius Lichtaustritt | 3.600E-04 m | |
| Biegungsradius | | 4.500E-03 m |
| Biegungswinkel | | 40.00° |

| Fig. 17 | Kegel | Biegung |
|---|---|---|
| Aufweitungslänge | 5.00E-03 m | |
| Kernradius Lichteintritt | 1.500E-05 m | 3.000E-05 m |
| Kernradius Lichtaustritt | 3.000E-05 m | |
| Biegungsradius | | 4.500E-03 m |
| Biegungswinkel | | 40.00° |

| Fig. 18 | Kegel | Biegung |
|---|---|---|
| Aufweitungslänge | 5.00E-03 m | |
| Kernradius Lichteintritt | 3.000E-05 m | 6.000E-05 m |
| Kernradius Lichtaustritt | 6.000E-05 m | |

(fortgesetzt)

| Fig. 18 | Kegel | Biegung |
|---|---|---|
| Biegungsradius | | 4.500E-03 m |
| Biegungswinkel | | 40.00° |

| Fig. 19 | Kegel | Biegung |
|---|---|---|
| Aufweitungslänge | 5.00E-03 m | |
| Kernradius Lichteintritt | 6.000E-05 m | 1.200E-04 m |
| Kernradius Lichtaustritt | 1.200E-04 m | |
| Biegungsradius | | 4.500E-03 m |
| Biegungswinkel | | 40.00° |

| Fig. 20 | Kegel | Biegung |
|---|---|---|
| Aufweitungslänge | 5.00E-03 m | |
| Kernradius Lichteintritt | 1.200E-04 m | 2.400E-04 m |
| Kernradius Lichtaustritt | 2.400E-04 m | |
| Biegungsradius | | 4.500E-03 m |
| Biegungswinkel | | 40.00° |

| Fig. 21 | Kegel | Biegung |
|---|---|---|
| Aufweitungslänge | 5.00E-03 m | |
| Kernradius Lichteintritt | 2.500E-04 m | 5.000E-04 m |
| Kernradius Lichtaustritt | 5.000E-04 m | |
| Biegungsradius | | 4.500E-03 m |
| Biegungswinkel | | 40.00° |

| Fig. 22 | Kegel | Biegung |
|---|---|---|
| Aufweitungslänge | 5.00E-03 m | |
| Kernradius Lichteintritt | 4.000E-06 m | 1.600E-05 m |
| Kernradius Lichtaustritt | 1.600E-05 m | |
| Biegungsradius | | 4.500E-03 m |
| Biegungswinkel | | 40.00° |

| Fig. 23 | Kegel | Biegung |
|---|---|---|
| Aufweitungslänge | 5.00E-03 m | |
| Kernradius Lichteintritt | 7.500E-06 m | 3.000E-05 m |
| Kernradius Lichtaustritt | 3.000E-05 m | |
| Biegungsradius | | 4.500E-03 m |
| Biegungswinkel | | 40.00° |

| Fig. 24 | Kegel | Biegung |
|---|---|---|
| Aufweitungslänge | 5.00E-03 m | |
| Kernradius Lichteintritt | 1.500E-05 m | 6.000E-05 m |
| Kernradius Lichtaustritt | 6.000E-05 m | |
| Biegungsradius | | 4.500E-03 m |
| Biegungswinkel | | 40.00° |

| Fig. 25 | Kegel | Biegung |
|---|---|---|
| Aufweitungslänge | 5.00E-03 m | |
| Kernradius Lichteintritt | 3.000E-05 m | 1.200E-04 m |
| Kernradius Lichtaustritt | 1.200E-04 m | |
| Biegungsradius | | 4.500E-03 m |
| Biegungswinkel | | 40.00° |

Aus den Simulationen lassen sich, insbesondere mit den vorstehend beschriebenen Definitionen, folgende Werte bzw. Tripel für die Inhomogenität, die Rundheit und den Streulichtanteil bestimmen und/oder lässt sich ein Abstrahlwinkel festlegen, um zu diesen Werten bzw. Tripeln zu gelangen:

Fig 13:

| Inhomogenität | Rundheit | Streulichteffekt |
|---|---|---|
| 0.199 | 0.878 | 0.028 |

Fig 14:

| Inhomogenität | Rundheit | Streulichteffekt |
|---|---|---|
| 0.143 | 0.822 | 0.128 |

Fig 15

| Inhomogenität | Rundheit | Streulichteffekt |
|---|---|---|
| 0.206 | 0.595 | 0.100 |

Fig. 16

| Inhomogenität | Rundheit | Streulichteffekt |
|---|---|---|
| 0.345 | 0.154 | 0.922 |

**Fig. 17**

| Inhomogenität | Rundheit | Streulichteffekt |
|---|---|---|
| 0.146 | 0.891 | 0.014 |

**Fig. 18**

| Inhomogenität | Rundheit | Streulichteffekt |
|---|---|---|
| 0.172 | 0.906 | 0.020 |

**Fig. 19**

| Inhomogenität | Rundheit | Streulichteffekt |
|---|---|---|
| 0.187 | 0.742 | 0.066 |

**Fig 20**

| Inhomogenität | Rundheit | Streulichteffekt |
|---|---|---|
| 0.248 | 0.426 | 0.068 |

**Fig 21**

| Inhomogenität | Rundheit | Streulichteffekt |
|---|---|---|
| 0.304 | 0.230 | 0.765 |

**Fig. 22**

| Inhomogenität | Rundheit | Streulichteffekt |
|---|---|---|
| 0.162 | 0.945 | 0.001 |

**Fig 23**

| Inhomogenität | Rundheit | Streulichteffekt |
|---|---|---|
| 0.125 | 0.948 | 0.049 |

**Fig 24**

| Inhomogenität | Rundheit | Streulichteffekt |
|---|---|---|
| 0.186 | 0.575 | 0.167 |

**Fig 25**

| Inhomogenität | Rundheit | Streulichteffekt |
|---|---|---|
| 0.355 | 0.334 | 0.442 |

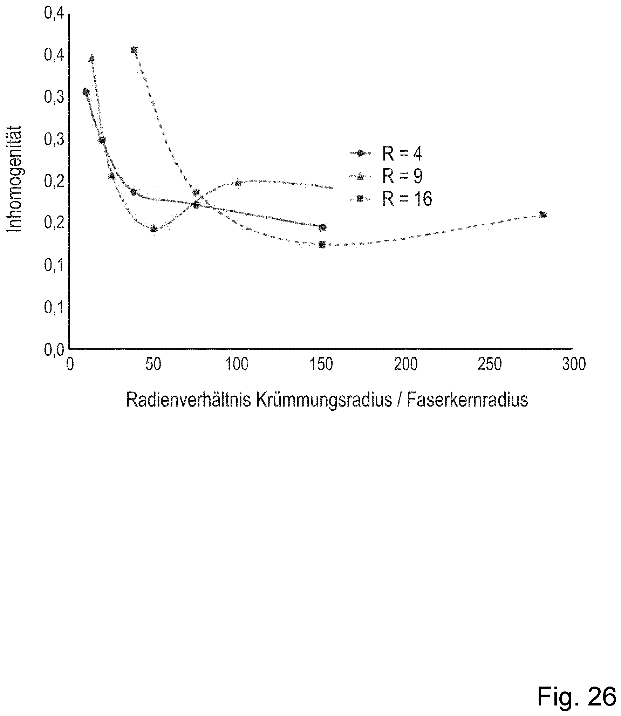

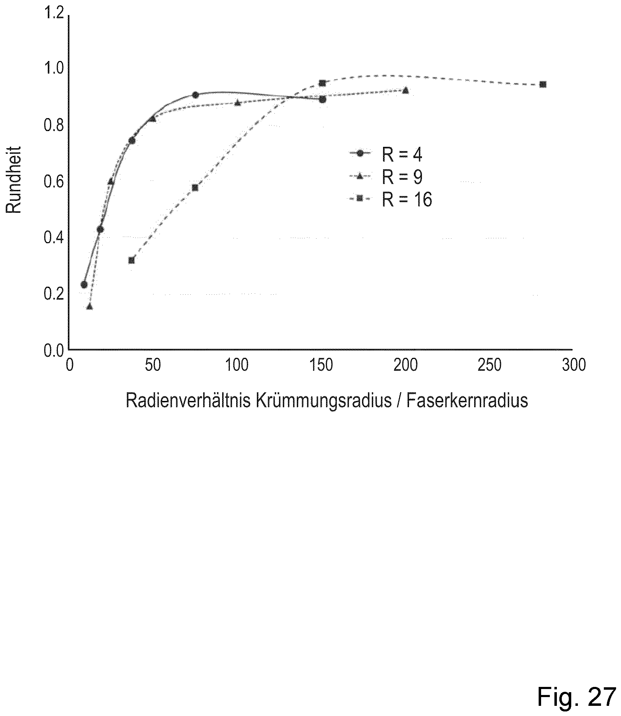

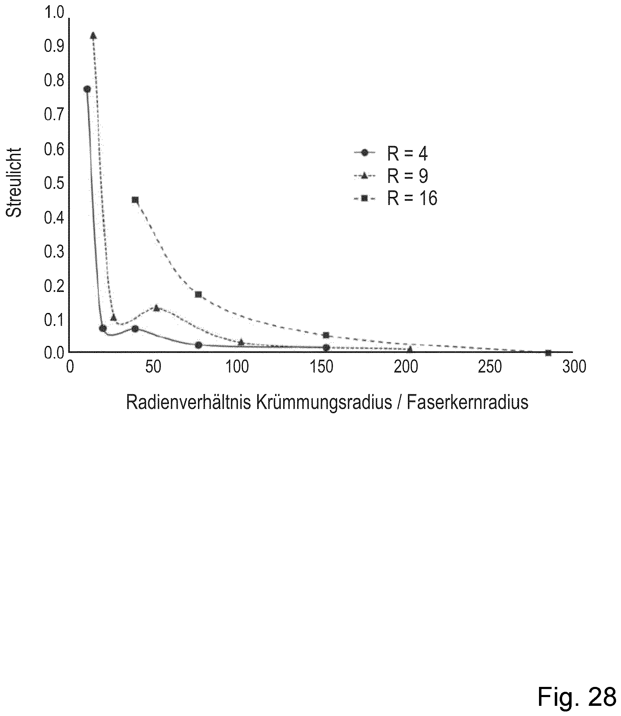

Die Fig. 26, 27 und 28 geben einen Überblick über die Inhomogenität, die Rundheit und den Streulichteffekt. Die Werte sind dabei aufgetragen über das Verhältnis aus Krümmungsradius im Krümmungsabschnitt 140 (vgl. Fig. 9, 10) und dem Radius des Kerns der Fasern. Mit R ist in den Abbildungen das Verhältnis der Lichtaustrittsfläche zu der Lichteintrittsfläche bezeichnet.

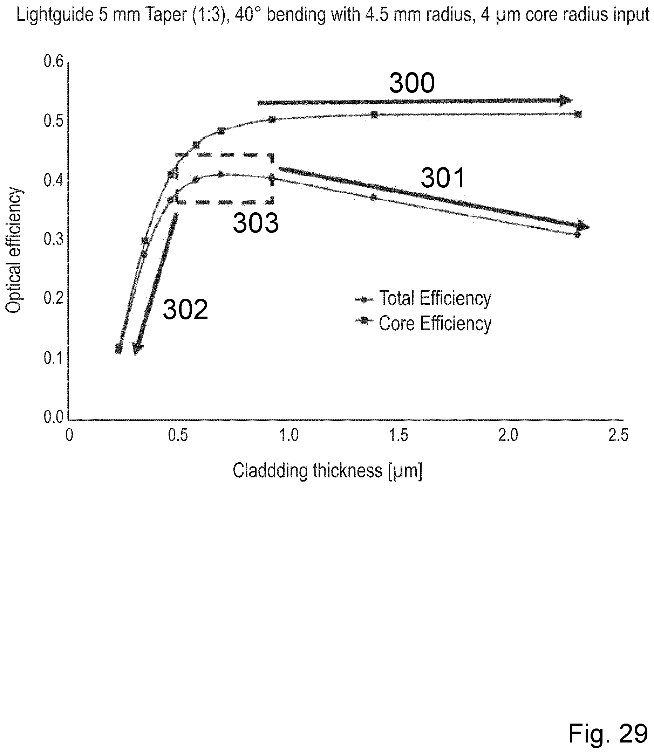

Die Fig. 29 zeigt für ein beispielhaftes optisches Element die optische Effizienz aufgetragen gegen die Manteldicke in μm, wobei die Brechzahl des Kerns 1,624 und des Mantels 1,492 beträgt. Hieran lässt sich der Einfluss der Manteldicke wie folgt beschreiben. Entlang des Pfeils 300 verbessert eine zusätzliche Manteldicke die Lichtleitung nur noch unwesentlich. Entlang des Pfeils 301 nimmt die Gesamteffizient ab, da anteilig mehr Licht in den Mantel eingekoppelt wird. Entlang des Pfeils 302 erfolgt ein Rückgang der Effizienz, da Licht durch dünnen Mantel nicht mehr vollständig geleitet wird. Hieraus ergibt sich ein optimaler Bereich, welcher mit einem gestrichelten Kasten 303 gekennzeichnet ist.

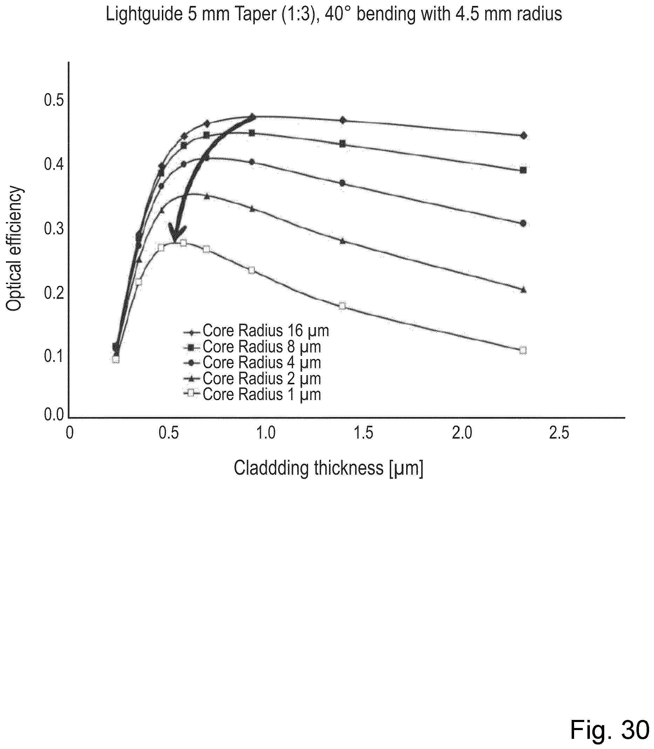

Die Fig. 30 zeigt für ein beispielhaftes optisches Element die optische Effizienz aufgetragen gegen die Manteldicke in μm für verschiedene Kernradien. Hieran lässt sich feststellen: Je kleiner der Kernradius desto geringer die maximal erreichbare Gesamteffizienz. Insbesondere unterhalb von 4 μm ist der Effekt ausgeprägt, da Kerndurchmesser und optimale Manteldicke in der Größenordnung der Wellenlänge des sichtbaren Lichts liegen. Durch die Notwendigkeit einer engen Lichtführung ist der Kernradius nach oben begrenzt. Durch die erreichbare Effizienz ist der Kernradius nach unten begrenzt.

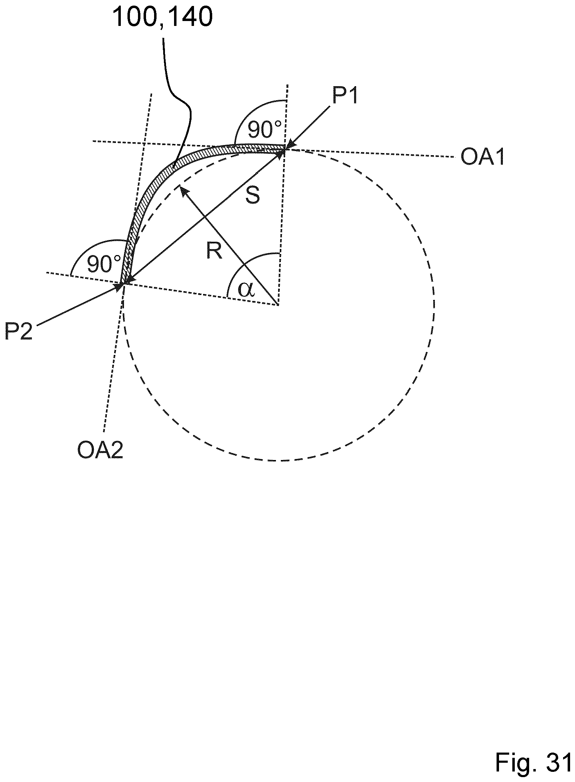

Die Fig. 31 zeigt einen Teil eines optischen Elements 100, nämlich dessen Krümmungsabschnitt 140 innerhalb dessen die optische Achse gebogen verläuft. Die optische Achse des optischen Elements verläuft in diesem Beispiel nicht auf einem idealen Kreisbogen. Der Krümmungsabschnitt 140 beginnt im Punkt P1 und endet im Punkt P2. Die beiden Punkte haben einen Abstand s zueinander. Die Richtung der optischen Achse ändert sich um einen Winkel α (Die optische Achse OA1 am Punkt P1 und die optischen Achse OA2 am Punkt P2 haben einen Winkel α zueinander). Aus dem Abstand s und dem Winkel α lässt sich der Radius R für einen Kreisbogen berechnen, der ebenfalls die Punkte P1 und P2 verbindet: R = s / (2*sin(α/2)). Ein Kreisbogen mit diesem Radius führt also zwischen den beiden Punkten zur selben Winkeländerung der optischen Achse. R wird als äquivalenter Krümmungsradius bezeichnet.

**Patentansprüche**

1. Optisches Element (100) zur Verminderung der Divergenz und zur Änderung der Richtung von Licht umfassend:

    eine Lichteintrittsfläche (110) zur Einkopplung von Licht mit einer primären Abstrahlcharakteristik und eine Lichtaustrittsfläche (120) zur Auskopplung des eingekoppelten Lichts mit einer sekundären Abstrahlcharakteristik,
    wobei die sekundäre Abstrahlcharakteristik einen Abstrahlwinkel (β) aufweist, welcher geringer ist als der Abstrahlwinkel der primären Abstrahlcharakteristik, um die Divergenz des Lichts zu vermindern, und
    wobei die optische Achse der Lichtaustrittsfläche (120) schräg zu der optischen Achse der Lichteintrittsfläche (110) verläuft, um die Richtung des Lichts zu ändern, und
    wobei das optische Element eine Vielzahl von Lichtleitelementen (200) umfasst welche jeweils einen Teil der Lichteintrittsfläche (110) und einen Teil der Lichtaustrittsfläche (120) bilden und jeweils einen Kern und einen Mantel aufweisen und jeweils eine zwischen der Lichteintrittsfläche und der Lichtaustrittsfläche verlaufende Grenzfläche (210) zur Reflexion, insbesondere zur Totalreflektion an dieser Grenzfläche (210), des eingekoppelten Lichts umfassen,

wobei die Lichtleitelemente jeweils an der Lichtaustrittsfläche (120) einen Querschnitt aufweisen, welcher größer ist als der Querschnitt an der Lichteintrittsfläche (110), insbesondere derart, dass die Lichtaustrittsfläche (120) größer ist als die Lichteintrittsfläche (110), und

wobei das optische Element einen Krümmungsabschnitt (140) aufweist innerhalb dessen die optische Achse des optischen Elements gebogen verläuft,

**dadurch gekennzeichnet, dass**

das Verhältnis des Krümmungsradius oder des äquivalenten Krümmungsradius des Krümmungsabschnitts und dem Durchmesser des Kerns der Lichtleitelemente zumindest im Krümmungsabschnitt zumindest 10 beträgt.

2. Optisches Element gemäß dem vorstehenden Anspruch,

wobei das optische Element einen Aufweitungsabschnitt (130) umfasst innerhalb dessen der Querschnitt der Lichtleitelemente und/oder der Querschnitt des optischen Elements zunimmt, insbesondere konusförmig zunimmt, und/oder

wobei innerhalb des Krümmungsabschnitts (140) die optische Achse des optischen Elements auf einem Kreisbogen verläuft,

wobei der Aufweitungsabschnitt (130) und der Krümmungsabschnitt (140) bevorzugt entlang der optischen Achse voneinander beabstandet, angeordnet sind, besonders bevorzugt derart, dass der Aufweitungsabschnitt (130) näher an der Lichteintrittsfläche und Krümmungsabschnitt (140) näher an der Lichtaustrittsfläche angeordnet ist, und/oder

wobei das optische Element einen oder mehrere Linearabschnitte (150) aufweist innerhalb derer der Querschnitt konstant bleibt und die optische Achse geradlinig verläuft, wobei der oder die Linearabschnitte bevorzugt vor und/oder hinter dem Aufweitungsabschnitt und/oder dem Krümmungsabschnitt, besonders bevorzugt zwischen dem Aufweitungsabschnitt und dem Krümmungsabschnitt angeordnet sind und/oder

wobei der Aufweitungsabschnitt, der Krümmungsabschnitt und/oder der oder die Linearabschnitte vorzugsweise entlang der optischen Achse miteinander monolithisch ausgebildet sind.

3. Optisches Element gemäß einem der vorstehenden Ansprüche,

wobei die sekundäre Abstrahlcharakteristik einen Abstrahlwinkel ($\beta$) aufweist, welcher geringer ist als 60 Grad, vorzugsweise geringer ist als 50 Grad, besonders bevorzugt geringer ist als 40 Grad, und/oder

wobei das optische Element ein Verhältnis zwischen dem Abstrahlwinkel ($\beta$) der sekundären Abstrahlcharakteristik und dem Abstrahlwinkel ($\alpha$) der primären Abstrahlcharakteristik definiert, welches geringer ist als 0,7, vorzugsweise geringer ist als 0,6, besonders bevorzugt geringer ist als 0,5 und/oder

wobei das optische Element ein Verhältnis $\dfrac{(\sin \alpha / \sin \beta)^2}{}$ für den Abstrahlwinkel ($\alpha$) der primären Abstrahlcharakteristik und den Abstrahlwinkel ($\beta$) der sekundären Abstrahlcharakteristik definiert, welches zwischen 2 und 100 liegt, vorzugsweise zwischen 3 und 50 liegt, besonders bevorzugt zwischen 4 und 25 liegt, nochmals bevorzugter zwischen 5 und 15 liegt.

4. Optisches Element gemäß einem der vorstehenden Ansprüche,

wobei die sekundäre Abstrahlcharakteristik eine Rundheit aufweist, welche größer ist als 0,4 und eine Inhomogenität aufweist, welche geringer ist als 0,35 und einen Streulichtanteil aufweist, welcher geringer ist als 0,2,

wobei die sekundäre Abstrahlcharakteristik bevorzugt eine Rundheit aufweist, welche größer ist als 0,65 und eine Inhomogenität aufweist, welche geringer ist als 0,25 und einen Streulichtanteil aufweist, welcher geringer ist als 0,15,

wobei die sekundäre Abstrahlcharakteristik besonders bevorzugt eine Rundheit aufweist, welche größer ist als 0,85 und eine Inhomogenität aufweist, welche geringer ist als 0,2 und einen Streulichtanteil aufweist, welcher geringer ist als 0,05.

5. Optisches Element gemäß einem der vorstehenden Ansprüche,

wobei das Verhältnis der Flächen der Lichtaustrittsfläche und der Lichteintrittsfläche und/oder der Querschnitte der Lichtleitelemente an der Lichtaustrittsfläche und der Lichteintrittsfläche zwischen 2 und 100, vorzugsweise zwischen 3 und 50 liegt, besonders bevorzugt zwischen 4 und 25 liegt, nochmals bevorzugter zwischen 5 und 15 liegt, und/oder

wobei das optische Element einen senkrecht zur optischen Achse gebildeten Querschnitt aufweist, welcher rund, insbesondere kreisförmig, eckig, insbesondere polygonal oder quadratisch und/oder wobei die Form des Querschnitts entlang der gesamten Länge der optischen Achse kongruent bleibt.

6. Optisches Element gemäß einem der vorstehenden Ansprüche,

wobei der Winkel zwischen der optischen Achse der Lichtaustrittsfläche und der optischen Achse der Lichteintrittsfläche und/oder der durch den Krümmungsabschnitt bedingte Winkel, größer ist als 10 Grad, bevorzugt größer ist als 20 Grad, besonders bevorzugt größer ist als 30 Grad, oder größer ist als 40 Grad, oder größer ist als 80 Grad und/oder

wobei der Krümmungsabschnitt innerhalb dessen die optische Achse des optischen Element gebogen verläuft, insbesondere auf einem Kreisbogen verläuft, einen äquivalenten Krümmungsradius aufweist, welcher größer ist als 2 Millimeter, bevorzugt größer ist als 4 Millimeter, besonders bevorzugt größer ist als 8 Millimeter, oder größer ist als 16 Millimeter oder größer ist als 32 Millimeter, und vorzugsweise kleiner ist als 40 Millimeter,

wobei der äquivalente Krümmungsradius dem Krümmungsradius desjenigen Kreisbogens entspricht, welcher zumindest am Anfang des Krümmungsabschnitts (P1) sowie am Ende des Krümmungsabschnitts (P2) kongruent mit der optischen Achse des optischen Elements verläuft.

7. Optisches Element gemäß einem der vorstehenden Ansprüche,

wobei die Vielzahl von Lichtleitelementen mindestens 10, bevorzugt mindestens 100, besonders bevorzugt mindestens 1000, nochmals bevorzugter mindestens 10000 Lichtleitelemente umfasst, welche insbesondere als einzelne, miteinander verbundenen insbesondere verschmolzene Lichtleitfasern ausgebildet sind, und/oder

wobei die Lichtleitelemente jeweils einen Kern und einen Mantel umfassen, wobei der Kern einen Brechungsindex aufweist, welcher höher ist als ein Brechungsindex des Mantels,

wobei die Lichtleitelemente jeweils einen Kern umfassen, welcher einen Durchmesser aufweist, welcher geringer ist als 1000 Mikrometer, bevorzugt geringer ist als 200 Mikrometer, besonders bevorzugt geringer ist als 100 Mikrometer oder geringer ist als 50 Mikrometer oder geringer ist als 16 Mikrometer oder geringer ist als 8 Mikrometer oder geringer ist als 4 Mikrometer, wobei der Durchmesser insbesondere an der Lichteintrittsfläche vorliegt, und/oder

wobei die Lichtleitelemente jeweils einen Mantel umfassen, wobei das Verhältnis der Manteldicke zu dem Kernradius kleiner ist als 0,5, vorzugsweise kleiner ist als 0,1, besonders bevorzugt kleiner ist als 0,01, und/oder wobei die Manteldicke vorzugsweise zumindest 300 Nanometer beträgt.

8. Optisches Element gemäß einem der vorstehenden Ansprüche,

wobei das Verhältnis der Länge des Aufweitungsabschnitts und dem Durchmesser des Kerns der Lichtleitelemente, insbesondere an der Lichteintrittsfläche, zumindest 10 beträgt, vorzugsweise zumindest 25 beträgt, besonders bevorzugt zumindest 50 beträgt, und/oder

wobei das Verhältnis des Krümmungsradius des Krümmungsabschnitts, insbesondere des äquivalenten Krümmungsradius, und dem Durchmesser des Kerns der Lichtleitelemente, insbesondere im Krümmungsabschnitt, zumindest 40 beträgt, bevorzugt zumindest 75 beträgt.

9. Optisches Element gemäß einem der vorstehenden Ansprüche,

wobei das optische Element, insbesondere der Kern der Lichtleitelemente, ein Glas, insbesondere ein mehrkomponentiges silikatisches Glas, umfasst oder daraus besteht, und/oder

wobei die Lichtleitelemente einen Kern und einen Mantel umfassen, wobei das Kern- und/oder das Mantelglas der Lichtleitelemente bis auf unvermeidliche Spuren frei ist von Blei und/oder Antimon und/oder Arsen und/oder von sonstigen Schwermetallen, und/oder

wobei die Lichtleitelemente eine numerische Apertur gegenüber Luft von größer als 0,80, bevorzugt von größer als 0,85 aufweisen und/oder ein Glassystem umfassen oder aus einem solchen bestehen, welches für das zu leitende Licht einen Akzeptanzwinkel $2\alpha$ von größer 80°, besonders bevorzugt von größer 100° aufweist.

10. Beleuchtungseinrichtung (1) umfassend:
eine Lichtquelle (10) zur Abstrahlung von Licht, insbesondere eine Leuchtdiode, und ein optisches Element (100) gemäß einem der vorstehenden Ansprüche zur Verminderung der Divergenz und Änderung der Richtung des von der Lichtquelle abgestrahlten Lichts.

11. Beleuchtungseinrichtung (1) gemäß Anspruch 10 oder optisches Element (100) gemäß einem der Ansprüche 1 bis 9,

wobei die Abmessung des optischen Elements senkrecht zur optischen Achse, insbesondere senkrecht zur optischen Achse der Lichteintrittsfläche, kleiner ist als 10 Millimeter, vorzugsweise kleiner ist als 7 Millimeter, besonders bevorzugt kleiner ist als 6 Millimeter, um einen Einbau hinter einer Verkleidung, z.B. der Innenraumverkleidung (50), insbesondere der Kabinenverkleidung des Flugzeugs, in oder an einem Sitz, z.B. einem Flugzeugsitz, zu ermöglichen, vorzugsweise derart, dass die optische Achse der Lichteintrittsfläche (110) parallel zur Innenraumverkleidung (50) verläuft und/oder die optische Achse der Lichtaustrittsfläche (120) schräg zu der Innenraumverkleidung (50) verläuft.

12. Verwendung einer Beleuchtungseinrichtung (1) gemäß einem der Ansprüche 10 oder 11, oder eines optischen Elements (100) gemäß einem der Ansprüche 1 bis 9, zum Einbau hinter einer Verkleidung, z.B. einer Innenraumverkleidung (50) mit einer Lichtaustrittsöffnung (60), z.B. in eine Kabinenverkleidung einer Flugzeugkabine, in oder an einem Sitz, z.B. einen Flugzeugsitz.

13. Diagnose-, Operations- und/oder Therapiegerät umfassend eine Beleuchtungseinrichtung (1) gemäß einem der Ansprüche 10 oder 11, oder ein optisches Element (100) gemäß einem der Ansprüche 1 bis 9,

wobei vorzugsweise die Fasern, Faserbündel, Faserstäbe oder gepressten Faserstäbe ein Pb- bzw. Schwermetall-freies Kernglas und/oder Mantelglas umfassen oder aus einem solchen bestehen und/oder wobei vorzugsweise die Fasern, Faserbündel, Faserstäbe oder gepressten Faserstäbe ein Glassystem umfassen oder aus einem solchen bestehen, welches für das zu leitende Licht einen Akzeptanzwinkel 2α von größer 80°, besonders bevorzugt von größer 100° aufweist.

**Claims**

1. An optical element (100) for reducing divergence and for changing the direction of light, comprising:

a light entry face (110) for injecting light having a primary emission characteristic, and a light exit face (120) for emitting the injected light with a secondary emission characteristic; wherein the secondary emission characteristic has an emission angle ($\beta$) which is smaller than the emission angle of the primary emission characteristic, in order to reduce the divergence of the light; and wherein the optical axis of the light exit face (120) extends obliquely relative to the optical axis of the light entry face (110), in order to change the direction of the light; and wherein the optical element comprises a multitude of light guiding elements (200) each one forming part of the light entry face (110) and part of the light exit face (120), and each having a core and a cladding and comprising a respective boundary surface (210) extending between the light entry face and the light exit face for reflection, in particular total internal reflection of the injected light at this boundary surface (210); and wherein the light guiding elements each have a cross-sectional area at the light exit face (120), which is larger than the cross-sectional area at the light entry face (110), in particular such that the light exit face (120) is larger than the light entry face (110); and wherein the optical element has a curved section (140) within which the optical axis of the optical element extends along a curve; **characterised in that** the ratio of the radius of curvature or of the equivalent radius of curvature of the curved section and the diameter of the core of the light guiding elements is at least 10, at least in the curved section.

2. The optical element according to the preceding claim,

wherein the optical element comprises a widening section (130) within which the cross-sectional area of the light guiding elements and/or the cross-sectional area of the optical element increases, in particular increases conically; and/or wherein within the curved section (140) the optical axis of the optical element extends along a circular arc; wherein the widening section (130) and the curved section (140) are preferably spaced apart from one another along the optical axis, most preferably in a way such that the widening section (130) is located closer to the light entry face and the curved section (140) is located closer to the light exit face; and/or

wherein the optical element comprises one or more linear sections (150) within which the cross-sectional area remains constant and the optical axis extends along a straight line, wherein the one or more linear section(s) are preferably provided upstream of and/or downstream of the widening section and/or of the curved section, most preferably between the widening section and the curved section; and/or

wherein the widening section, the curved section, and/or the one or more linear section(s) are preferably formed monolithically with one another along the optical axis.

3. The optical element according to any one of the preceding claims,

wherein the secondary emission characteristic has an emission angle ($\beta$) that is smaller than 60 degrees, preferably smaller than 50 degrees, most preferably smaller than 40 degrees; and/or

wherein the optical element defines a ratio between the emission angle ($\beta$) of the secondary emission characteristic and the emission angle ($\alpha$) of the primary emission characteristic of less than 0.7, preferably less than 0.6, most preferably less than 0.5; and/or

wherein the optical element defines a ratio $(\sin\alpha/\sin\beta)^2$ for the emission angle ($\alpha$) of the primary emission characteristic and the emission angle ($\beta$) of the secondary emission characteristic, which is between 2 and 100, preferably between 3 and 50, more preferably between 4 and 25, most preferably between 5 and 15.

4. The optical element according to any one of the preceding claims,

wherein the secondary emission characteristic has a roundness of greater than 0.4 and an inhomogeneity of less than 0.35 and a stray light proportion of less than 0.2;

wherein, preferably, the secondary emission characteristic has a roundness of greater than 0.65 and an inhomogeneity of less than 0.25 and a stray light proportion of less than 0.15;

wherein, most preferably, the secondary emission characteristic has a roundness of greater than 0.85 and an inhomogeneity of less than 0.2 and a stray light proportion of less than 0.05.

5. The optical element according to any one of the preceding claims,

wherein a ratio of the surface areas of the light exit face and the light entry face and/or of the cross-sectional areas of the light guiding elements at the light exit face and the light entry face is between 2 and 100, preferably between 3 and 50, more preferably between 4 and 25, most preferably between 5 and 15; and/or

wherein the optical element has a cross-sectional shape defined perpendicular to the optical axis, which is round, in particular circular, or angular, in particular polygonal, or square; and/or wherein the cross-sectional shape remains congruent along the entire length of the optical axis.

6. The optical element according to any one of the preceding claims,

wherein the angle between the optical axis of the light exit face and the optical axis of the light entry face and/or the angle defined by the curved section is greater than 10 degrees, preferably greater than 20 degrees, more preferably greater than 30 degrees, or greater than 40 degrees, or greater than 80 degrees; and/or

wherein the curved section within which the optical axis of the optical element is curved, in particular extending along a circular arc, has an equivalent radius of curvature of greater than 2 millimetres, preferably greater than 4 millimetres, more preferably greater than 8 millimetres, or greater than 16 millimetres, or greater than 32 millimetres, and preferably less than 40 millimetres;

wherein the equivalent radius of curvature corresponds to the radius of curvature of the circular arc which extends congruently with the optical axis of the optical element at least at the beginning of the curved section (P1) and at the end of the curved section (P2).

7. The optical element according to any one of the preceding claims,

wherein the multitude of light guiding elements comprises at least 10, preferably at least 100, more preferably at least 1000, most preferably at least 10,000 light guiding elements, which are in particular in the form of individual optical fibres that are bonded to one another, in particular fused together; and/or

wherein the light guiding elements each comprise a core and a cladding, the core having a refractive index which is greater than a refractive index of the cladding;

wherein the light guiding elements each comprise a core which has a diameter of less than 1000 micrometres, preferably less than 200 micrometres, more preferably less than 100 micrometres, or less than 50 micrometres, or less than 16 micrometres, or less than 8 micrometres, or less than 4 micrometres, said diameter being given in particular at the light entry face; and/or
wherein the light guiding elements each comprise a cladding, wherein a ratio of the thickness of the cladding to the radius of the core is less than 0.5, preferably less than 0.1, most preferably less than 0.01; and/or wherein the thickness of the cladding is preferably at least 300 nanometres.

8. The optical element according to any one of the preceding claims,

wherein a ratio of the length of the widening section and the diameter of the core of the light guiding elements, in particular at the light entry face, is at least 10, preferably at least 25, most preferably at least 50; and/or
wherein a ratio of the radius of curvature of the curved section, in particular the equivalent radius of curvature, and the diameter of the core of the light guiding elements, in particular in the curved section, is at least 40, preferably at least 75.

9. The optical element according to any one of the preceding claims,

wherein the optical element, in particular the core of the light guiding elements, comprises or is made of a glass, in particular a multi-component silicate glass; and/or
wherein the light guiding elements comprise a core and a cladding, wherein the core glass and/or the cladding glass of the light guiding elements is free of lead and/or of antimony and/or of arsenic and/or of other heavy metals, apart from unavoidable traces; and/or
wherein the light guiding elements have a numerical aperture in air of greater than 0.80, preferably greater than 0.85, and/or comprise or are made of a glass system which has an acceptance angle $2\alpha$ for the light to be guided of greater than 80°, most preferably greater than 100°.

10. An illumination device (1), comprising:
a light source (10) for emitting light, in particular a light-emitting diode, and an optical element (100) according to any one of the preceding claims, for reducing divergence and changing the direction of the light emitted by the light source.

11. The illumination device (1) according to claim 10 or the optical element (100) according to any one of claims 1 to 9,

wherein the dimension of the optical element perpendicular to the optical axis, in particular perpendicular to the optical axis of the light entry face, is less than 10 millimetres, preferably less than 7 millimetres, most preferably less than 6 millimetres,
in order to enable installation behind a lining such as the interior lining (50), in particular cabin lining of an aircraft, in or on a seat such as an aircraft seat, preferably in such a way that the optical axis of the light entry face (110) extends in parallel to the interior lining (50) and/or the optical axis of the light exit face (120) extends obliquely relative to the interior lining (50).

12. Use of an illumination device (1) according to any one of claims 10 or 11 or of an optical element (100) according to any one of claims 1 to 9 for being installed behind a lining such as an interior lining (50) which has a light exit opening (60), e.g. a cabin lining of an aircraft cabin, in or on a seat such as an aircraft seat.

13. A diagnostic, surgical and/or therapeutic device, comprising an illumination device (1) according to any one of claims 10 or 11 or an optical element (100) according to any one of claims 1 to 9,

wherein the fibres, fibre bundles, fibre rods, or pressed fibre rods comprise or are made of a core glass and/or a cladding glass, which are free of Pb and of heavy metals; and/or
wherein the fibres, fibre bundles, fibre rods or pressed fibre rods preferably comprise or are made of a glass system which has an acceptance angle $2\alpha$ for the light to be guided of greater than 80°, most preferably greater than 100°.

**Revendications**

1. Elément optique (100) destiné à réduire la divergence et à modifier la direction de la lumière, comprenant :

une surface d'entrée de lumière (110), pour l'injection de la lumière avec une caractéristique de rayonnement primaire, et une surface de sortie de lumière (120) pour le découplage de la lumière injectée avec une caractéristique de rayonnement secondaire,

dans lequel la caractéristique de rayonnement secondaire présente un angle de rayonnement (β) qui est inférieur à l'angle de rayonnement de la caractéristique de rayonnement primaire, aux fins de réduire la divergence de la lumière, et

dans lequel l'axe optique de la surface de sortie de lumière (120) s'étend en biais par rapport à l'axe optique de la surface d'entrée de lumière (110), aux fins de modifier la direction de la lumière, et

dans lequel l'élément optique comporte une pluralité d'éléments de guidage de lumière (200) qui constituent chacun une partie de la surface d'entrée de lumière (110) et une partie de la surface de sortie de lumière (120) et présentent chacun un cœur et une gaine et chacun une surface de séparation (210) s'étendant entre la surface d'entrée de lumière et la surface de sortie de lumière, en vue de la réflexion, notamment la réflexion totale de la lumière injectée, sur cette surface de séparation (210),

dans lequel les éléments de guidage de lumière présentent, respectivement sur la surface de sortie de lumière (120), une section qui est supérieure à la section au niveau de la surface d'entrée de lumière (110), notamment de manière à ce que la surface de sortie de lumière (120) soit plus grande que la surface d'entrée de lumière (110), et

dans lequel l'élément optique présente un angle de courbure (140) à l'intérieur duquel l'axe optique de l'élément optique s'étend sous une forme incurvée,

**caractérisé en ce que**

le rapport entre le rayon de courbure ou le rayon de courbure équivalent de la portion de courbure et le diamètre du cœur des éléments de guidage de lumière est au moins de 10, au moins dans la portion de courbure.

**2.** Elément optique selon la revendication précédente,

dans lequel l'élément optique comporte une portion d'élargissement (130) dans laquelle la section des éléments de guidage de lumière et/ou la section de l'élément optique augmente, notamment sous une forme conique, et/ou

dans lequel l'axe optique de l'élément optique s'étend sur un arc de cercle dans la portion de courbure (140),

dans lequel la portion d'élargissement (130) et la portion de courbure (140) sont disposées en étant espacées de préférence le long de l'axe optique, de manière particulièrement avantageuse de manière à ce que la portion d'élargissement (130) soit disposée plus près de la surface d'entrée de lumière et la portion de courbure (140) plus près de la surface de sortie de lumière, et/ou

dans lequel l'élément optique présente une ou plusieurs portions linéaires (150) dans lesquelles la section reste constante et l'axe optique s'étend sous une forme rectiligne, la ou les portion(s) linéaire(s) étant de préférence disposée(s) avant et/ou après la portion d'élargissement et/ou la portion de courbure, de manière particulièrement avantageuse entre la portion d'élargissement et la portion de courbure, et/ou

dans lequel la portion d'élargissement, la portion de courbure et/ou la ou les portion(s) linéaire(s) sont de préférence réalisées de manière monolithique les unes avec les autres, le long de l'axe optique.

**3.** Elément optique selon une des revendications précédentes,

dans lequel la caractéristique de rayonnement secondaire présente un angle de rayonnement (β) qui est inférieur à 60 degrés, de préférence inférieur à 50 degrés, et de manière particulièrement avantageuse inférieur à 40 degrés, et/ou

dans lequel l'élément optique définit un rapport entre l'angle de rayonnement (β) de la caractéristique de rayonnement secondaire et l'angle de rayonnement (α) de la caractéristique de rayonnement primaire qui est inférieur à 0,7, de préférence inférieur à 0,6, et de manière particulièrement avantageuse inférieur à 0,5, et/ou

dans lequel l'élément optique définit un rapport $(\sin\alpha/\sin\beta)^2$ pour l'angle de rayonnement (α) de la caractéristique de rayonnement primaire et l'angle de rayonnement (β) de la caractéristique de rayonnement secondaire qui est compris entre 2 et 100, de préférence entre 3 et 50, de manière particulièrement avantageuse entre 4 et 25, voire de préférence entre 5 et 15.

**4.** Elément optique selon une des revendications précédentes,

dans lequel la caractéristique de rayonnement secondaire présente une circularité qui est supérieure à 0,4 et présente une inhomogénéité qui est inférieure à 0,35 et présente une part de lumière diffuse qui est inférieure à 0,2,

dans lequel la caractéristique de rayonnement secondaire présente de préférence une circularité qui est supérieure à 0,65 et présente une inhomogénéité qui est inférieure à 0,25 et présente une part de lumière diffuse qui est inférieure à 0,15,

dans lequel la caractéristique de rayonnement secondaire présente de manière particulièrement avantageuse une circularité qui est supérieure à 0,85 et présente une inhomogénéité qui est inférieure à 0,2 et présente une part de lumière diffuse qui est inférieure à 0,05.

**5.** Elément optique selon une des revendications précédentes,

dans lequel le rapport des surfaces de la surface de sortie de lumière et de la surface d'entrée de lumière et/ou des sections des éléments de guidage de lumière au niveau de la surface de sortie de lumière et de la surface d'entrée de lumière est compris entre 2 et 10, de préférence entre 3 et 50, de manière particulièrement avantageuse entre 4 et 25, voire de préférence entre 5 et 15, et/ou

dans lequel l'élément optique présente une section qui est formée perpendiculairement à l'axe optique et qui ronde, notamment circulaire, angulaire, notamment polygonale ou carrée, et/ou dans lequel la forme de la section reste congruente sur toute la longueur de l'axe optique.

**6.** Elément optique selon une des revendications précédentes,

dans lequel l'angle entre l'axe optique de la surface de sortie de lumière et l'axe optique de la surface d'entrée de lumière et/ou l'angle dû à la portion de courbure est supérieur à 10 degrés, de préférence supérieur à 20 degrés, de manière particulièrement avantageuse supérieur à 30 degrés, ou supérieur à 40 degrés, ou supérieur à 80 degrés, et/ou

dans lequel la portion de courbure, dans laquelle l'axe optique de l'élément optique est incurvé, notamment suivant un arc de cercle, présente un rayon de courbure équivalent qui est supérieur à 2 millimètres, de préférence supérieur à 4 millimètres, de manière particulièrement avantageuse supérieur à 8 millimètres, ou supérieur à 16 millimètres ou supérieur à 32 millimètres, et de préférence inférieur à 40 millimètres,

dans lequel le rayon de courbure équivalent correspond au rayon de courbure de l'arc de cercle qui s'étend, au moins au début de la portion de courbure (P1) et à la fin de la portion de courbure (P2), de manière congruente avec l'axe optique de l'élément optique.

**7.** Elément optique selon une des revendications précédentes,

dans lequel la pluralité d'éléments de guidage de lumière comprend au moins 10, de préférence au moins 100, de manière particulièrement avantageuse au moins 1 000, voire de préférence au moins 10 000 éléments de guidage de lumière qui sont réalisés notamment comme fibres optiques individuelles, reliées entre elles, notamment fondues, et/ou

dans lequel les éléments de guidage de lumière comportent chacun un cœur et une gaine, le cœur présentant un indice de réfraction qui est supérieur à un indice de réfraction de la gaine,

dans lequel les éléments de guidage de lumière comportent chacun un cœur présentant un diamètre qui est inférieur à 1 000 micromètres, de préférence inférieur à 200 micromètres, de manière particulièrement avantageuse inférieur à 100 micromètres ou inférieur à 50 micromètres ou inférieur à 16 micromètres ou inférieur à 8 micromètres ou inférieur à 4 micromètres, le diamètre étant présent notamment au niveau de la surface d'entrée de lumière, et/ou

dans lequel les éléments de guidage de lumière comportent chacun une gaine, le rapport de l'épaisseur de gaine au rayon de cœur étant inférieur à 0,5, de préférence inférieur à 0,1, de manière particulièrement avantageuse inférieur à 0,01, et/ou dans lequel l'épaisseur de gaine est de préférence d'au moins 300 nanomètres.

**8.** Elément optique selon une des revendications précédentes,

dans lequel le rapport entre la longueur de la portion d'élargissement et le diamètre du cœur des éléments de guidage de lumière, notamment sur la surface d'entrée de lumière, est au moins de 10, de préférence au moins de 25, et de manière particulièrement avantageuse au moins de 50, et/ou

dans lequel le rapport entre le rayon de courbure de la portion de courbure, notamment du rayon de courbure équivalent, et le diamètre du cœur des éléments de guidage de lumière, notamment dans la portion de courbure, est au moins de 40, de préférence d'au moins de 75.

**9.** Elément optique selon une des revendications précédentes,

dans lequel l'élément optique, notamment le cœur des éléments de guidage de lumière, comporte un verre, notamment un verre silicaté multicomposants, ou est constitué de celui-ci, et/ou

dans lequel les éléments de guidage de lumière comportent un cœur et une gaine, le verre du cœur et/ou de la gaine des éléments de guidage de lumière étant exempt de plomb et/ou d'antimoine et/ou d'arsenic et/ou d'autres métaux lourds, à l'exception de traces inévitables, et/ou

dans lequel les éléments de guidage de lumière comportent une ouverture numérique vis-à-vis de l'air qui est supérieure à 0,80, de préférence supérieure à 0,85, et/ou comportent un système de verre ou sont constitués d'un système de verre qui présente pour la lumière devant être guidée, un angle d'acceptance $2\alpha$ supérieur à 80°, de manière particulièrement avantageuse supérieur à 100°.

10. Dispositif d'éclairage (1) comprenant :
une source lumineuse (10) destinée à rayonner de la lumière, notamment une diode électroluminescente, et un élément optique (100) selon une des revendications précédentes, destiné à réduire la divergence et à modifier la direction de la lumière rayonnée par la source lumineuse.

11. Dispositif d'éclairage (1) selon la revendication 10, ou élément optique selon une des revendications 1 à 9,

dans lequel la dimension de l'élément optique, perpendiculairement à l'axe optique, en particulier perpendiculairement à l'axe optique de la surface d'entrée de lumière, est inférieure à 10 millimètres, de préférence inférieure à 7 millimètres, de manière particulièrement avantageuse inférieure à 6 millimètres,

aux fins de permettre une installation derrière un habillage, par exemple l'habillage d'un espace intérieur (50), notamment l'habillage de cabine de l'avion, dans ou sur un siège, par exemple un siège d'avion, de préférence de manière à ce que l'axe optique de la surface d'entrée de lumière (110) s'étende parallèlement à l'habillage de l'espace intérieur (50) et/ou que l'axe optique de la surface de sortie de lumière (120) s'étende en biais par rapport à l'habillage de l'espace intérieur (50).

12. Utilisation d'un dispositif d'éclairage (1) selon une des revendications 10 ou 11, ou d'un élément optique (100) selon une des revendications 1 à 9, pour l'installation derrière un habillage, par exemple un habillage d'un espace intérieur (50) doté d'une ouverture de sortie de lumière (60), par exemple dans un habillage de cabine d'un avion, dans ou sur un siège, par exemple un siège d'avion.

13. Appareil de diagnostic, d'opération et/ou de thérapie, comprenant un dispositif d'éclairage (1) selon une des revendications 10 ou 11, ou un élément optique (100) selon une des revendications 1 à 9,

dans lequel les fibres, faisceaux de fibres, tiges de fibres ou tiges de fibres pressées comportent de préférence un verre de cœur et/ou un verre de gaine exempt de plomb, respectivement de métaux lourds, ou sont constitués d'un verre de ce type, et/ou

dans lequel les fibres, faisceaux de fibres, tiges de fibres ou tiges de fibres pressées comportent de préférence un système de verre ou sont constitués d'un tel système qui présente pour la lumière devant être guidée, un angle d'acceptance $2\alpha$ supérieur à 80°, de manière particulièrement avantageuse supérieur à 100°.

Fig. 1

Fig. 2

Fig. 3

Fig. 4

Fig. 5

Fig. 6

Fig. 7

Fig. 8

Fig. 9

Fig. 10

Fig. 11

Fig. 12

β

Projektion

Plot Z

Plot Y

Fig. 13

β

Projektion

Plot Z

Plot Y

Fig. 14

Fig. 15

β

Projektion

0.5

-0.5   -0.4   -0.3   -0                                           0.5

-0.5

Plot Z

Plot Y

Fig. 16

β

Projektion

Plot Z

Plot Y

Fig. 17

Fig. 18

β

Projektion

Plot Z

Plot Y

Fig. 19

Fig. 20

Projektion

β

Plot Z

Plot Y

Fig. 21

β

Projektion

Plot Z

Plot Y

Fig. 22

Projektion

β

0.15

-0.15                                                                    0.15

-0.15

Plot Z

Plot Y

Fig. 23

Fig. 24

Fig. 25

Fig. 26

Fig. 27

Fig. 28

Lightguide 5 mm Taper (1:3), 40° bending with 4.5 mm radius, 4 μm core radius input

Fig. 29

Lightguide 5 mm Taper (1:3), 40° bending with 4.5 mm radius

Fig. 30

100,140

P1

90°

OA1

S

R

90°

α

P2

OA2

Fig. 31

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CA 979696 A
- DE 102012100233 B4
- DE 102013208838 B4
- EP 2072477 B1